(19) Europäisches Patentamt / European Patent Office / Office européen des brevets

(11) EP 2 511 357 A1

(12) # EUROPEAN PATENT APPLICATION

(43) Date of publication:
**17.10.2012 Bulletin 2012/42**

(21) Application number: **12163915.7**

(22) Date of filing: **12.04.2012**

(51) Int Cl.:
***C09J 7/00*** *(2006.01)* ***C09J 133/00*** *(2006.01)*
***C09J 133/08*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.04.2011 JP 2011089554**

(71) Applicant: **Nitto Denko Corporation**
**Ibaraki-shi**
**Osaka 567-8680 (JP)**

(72) Inventors:
- **Amano, Tatsumi**
  **Ibaraki-shi, Osaka 567-8680 (JP)**
- **Morimoto, Yu**
  **Ibaraki-shi, Osaka 567-8680 (JP)**
- **Mitsui, Kazuma**
  **Ibaraki-shi, Osaka 567-8680 (JP)**
- **Takashima, Kyoko**
  **Ibaraki-shi, Osaka 567-8680 (JP)**

(74) Representative: **Grünecker, Kinkeldey,**
**Stockmair & Schwanhäusser**
**Leopoldstrasse 4**
**80802 München (DE)**

(54) **Removable water-dispersible acrylic pressure-sensitive adhesive composition and pressure-sensitive adhesive sheet**

(57) A removable water-dispersible acrylic pressure-sensitive adhesive composition according to the present invention includes an acrylic emulsion polymer (A) including, as essential constitutive monomers, a (meth) acrylic alkyl ester in a content of 70 to 99.5 percent by weight, and a carboxyl-containing unsaturated monomer in a content of 0.5 to 10 percent by weight, each based on the total amount of constitutive monomers; a waterw-insoluble crosslinking agent (B); an acetylenic diol compound (C); and a compound (D) represented by chemical formula $CR^aO-(PO)_l-(EO)_m-(PO)_n-R^b$]. The acetylenic diol compound (C) has a HLB value of less than 13.

EP 2 511 357 A1

## Description

## Technical Field

The present invention relates to a removable, water-dispersible acrylic pressure-sensitive adhesive composition. Specifically, the present invention relates to a removable water-dispersible acrylic pressure-sensitive adhesive composition capable of forming a pressure-sensitive adhesive layer which less suffers from appearance defects (poor appearance) such as dimples, thereby has a good appearance, and is satisfactorily resistant to increase in adhesive strength with time. The present invention also relates to a pressure-sensitive adhesive sheet including a pressure-sensitive adhesive layer formed from the pressure-sensitive adhesive composition.

## Background Art

In production and working processes of optical elements (optical members; optical materials), surface-protecting films are used as to be affixed to surfaces of such optical elements for the purpose typically of preventing surface defects and staining, improving cutting workability, and suppressing cracking (see Patent Literature (PTL) 1 and 2) where the optical elements are typified by optical films such as polarizing plates, retardation films, and anti-reflective films. As such surface-protecting films, there are generally used removable pressure-sensitive adhesive sheets each including a plastic film substrate and, arranged on a surface thereof, a removable pressure-sensitive adhesive layer.

Solvent-borne acrylic pressure-sensitive adhesives have been generally used as pressure-sensitive adhesives for the surface-protecting films (see PTL 1 and 2). Because of containing organic solvents, the solvent-borne acrylic pressure-sensitive adhesives have been soughed to be switched to water-dispersible acrylic pressure-sensitive adhesives from the view point of working environmental conditions upon coating (see PTL 3 to 5).

Such surface-protecting films should exhibit sufficient adhesiveness during affixation to optical elements. In addition, they should have satisfactory peelability (removability) because they are peeled off (removed) after usage typically in production process of optical elements. For having satisfactory removability, such surface-protecting films should have small peel strength (light releasability) and, in addition, properties not to increase in adhesive strength (peel strength) with time after the affixation to an adherend such as an optical element (resistance to increase in adhesive strength).

For obtaining the properties such as light releasability (good removability) and resistance to increase in adhesive strength, it is effective to use a water-insoluble crosslinking agent in a pressure-sensitive adhesive (or pressure-sensitive adhesive composition). As examples of a pressure-sensitive adhesive composition using a water-insoluble crosslinking agent, there are known removable water-dispersible acrylic pressure-sensitive adhesive compositions each containing an oil-soluble crosslinking agent (see PTL 6 and 7).

However, the aforementioned pressure-sensitive adhesive compositions and other water-dispersible acrylic pressure-sensitive adhesive compositions each using a water-insoluble crosslinking agent include large particles of the water-insoluble crosslinking agent that has remained as being insufficiently dispersed, and the large particles often cause "dimples" and other appearance defects of the surface of the resulting pressure-sensitive adhesive layer upon formation thereof. For these reasons, the inspection of an adherend while a surface-protecting film is affixed thereon may be impeded, or other problems may occur particularly when such a water-insoluble crosslinking agent is used for a pressure-sensitive adhesive layer of a surface-protecting film.

Accordingly, under current circumstances, there has not yet been obtained a removable water-dispersible acrylic pressure-sensitive adhesive composition capable of forming a pressure-sensitive adhesive layer which excels in adhesiveness and removability (particularly in resistance to increase in adhesive strength), less suffers from appearance defects such as "dimples," and has a good appearance.

Such a water-dispersible acrylic pressure-sensitive adhesive composition contains a surfactant component therein for stable dispersibility in water, but the presence of the surfactant component causes the pressure-sensitive adhesive composition to be susceptible to foaming. In particular, the pressure-sensitive adhesive composition, when stirred in a stirring process, is liable to include air as bubbles, and the included bubbles are stabilized by the surfactant and become resistant to escaping out. The bubbles may remain in a pressure-sensitive adhesive layer formed from the pressure-sensitive adhesive composition or may form, for example, "dimples" in the surface of the pressure-sensitive adhesive layer, thus forming appearance defects and being problematic. For example, when the pressure-sensitive adhesive layer is used typically as a pressure-sensitive adhesive layer of a surface-protecting film, the appearance defects may impede the inspection of an adherend with the surface-protecting film being affixed thereto.

Particularly when the pressure-sensitive adhesive layer with such appearance defects is used in surface-protecting film applications (particularly in surface-protecting films for optical elements), the appearance defects may impede quality inspection and/or quality control, because it is difficult to distinguish bubbles remained in the pressure-sensitive adhesive layer and "dimples" present in the surface of the pressure-sensitive adhesive layer as defects of the

member (adherend such as an optical element) to which the film is applied or defects of the surface-protecting film itself. Accordingly, strong demands are made to provide a surface-protecting film being free from defects derived from bubbles.

As a possible solution to improvements (reduction) of the bubble-derived defects, defoaming agents are added, of which silicone defoaming agents and hydrophobic-silica-containing defoaming agents are expected for their satisfactory defoaming properties (see PTL 8 and 9).

However, the silicone defoaming agents are less uniformly dispersible in a pressure-sensitive adhesive composition, thereby locally form a highly hydrophobic portion, and this causes crawling upon the application of the pressure-sensitive adhesive composition. The silicone defoaming agents have poor miscibility (compatibility) with the acrylic emulsion polymer, thereby bleed out on the surface of the pressure-sensitive adhesive layer after its formation, and cause contamination (staining) to the adherend. Particularly when the resulting pressure-sensitive adhesive layer is used as surface-protecting films for optical elements, the contaminant may possibly affect the optical properties of the adherend optical element, thus being significantly problematic.

In contrast, the defoaming agents containing hydrophobic silica are satisfactorily uniformly dispersible in a pressure-sensitive adhesive composition, but the hydrophobic silica contained therein forms secondary aggregates to cause defects derived from or occurring from the silica particles. Independently, the pressure-sensitive adhesive composition, when used for the formation of surface-protecting films for optical elements, is generally filtrated typically through a filter to remove foreign matter from the composition, because such foreign matter, if present, will form optical defects. In the filtration, the filter may be clogged with the silica particles, and this reduces production efficiency.

Typically in surface-protecting film uses (particularly in uses of surface-protecting films for optical elements), staining (contamination) of the adherend surface causes problems such as adverse effects on optical properties of the optical element. The staining is due typically to remaining of the pressure-sensitive adhesive on the surface of the adherend (e.g., optical element) (so-called "adhesive residue") and due to transfer of components contained in the pressure-sensitive adhesive layer to the adherend surface upon removal of the pressure-sensitive adhesive sheet. To avoid these, pressure-sensitive adhesives and pressure-sensitive adhesive layers are strongly desired to less stain the adherend.

## Citation List

### Patent Literature

PTL 1: Japanese Unexamined Patent Application Publication (JP-A) No. H11-961
PTL 2: Japanese Unexamined Patent Application Publication (JP-A) No. 2001-64607
PTL 3: Japanese Unexamined Patent Application Publication (JP-A) No. 2001-131512
PTL 4: Japanese Unexamined Patent Application Publication (JP-A) No. 2003-27026
PTL 5: Japanese Patent No. 3810490
PTL 6: Japanese Unexamined Patent Application Publication (JP-A) No. 2004-91563
PTL 7: Japanese Unexamined Patent Application Publication (JP-A) No. 2006-169496
PTL 8: Japanese Unexamined Patent Application Publication (JP-A) No. H08-34963
PTL 9: Japanese Unexamined Patent Application Publication (JP-A) No. 2005-279565


## Summary of Invention

### Technical Problem

Accordingly, an object of the present invention is to provide a water-dispersible acrylic pressure-sensitive adhesive composition capable of forming a pressure-sensitive adhesive layer which is a removable pressure-sensitive adhesive layer, is resistant to increase in adhesive strength, has a good appearance (less suffers from dimples and other appearance defects), and less causes staining. Another object of the present invention is to provide a pressure-sensitive adhesive sheet having a pressure-sensitive adhesive layer formed from the pressure-sensitive adhesive composition.

### Solution to Problem

After intensive investigations to achieve the objects, the present inventors have found that, by including an acrylic emulsion polymer obtained from constitutive monomers in a specific composition; a water-insoluble crosslinking agent; a specific acetylenic diol compound; and a polyether compound having a specific structure as constituents, there

is obtained a water-dispersible acrylic pressure-sensitive adhesive composition (removable water-dispersible acrylic pressure-sensitive adhesive composition) capable of forming a pressure-sensitive adhesive layer which is resistant to increase in adhesive strength, has a good appearance, and less causes staining. The present invention has been made based on these findings.

Specifically, the present invention provides, in an aspect, a removable water-dispersible acrylic pressure-sensitive adhesive composition which includes an acrylic emulsion polymer (A) including a (meth)acrylic alkyl ester and a carboxyl-containing unsaturated monomer as essential constitutive monomers and having a content of the (meth) acrylic alkyl ester of from 70 to 99.5 percent by weight and a content of the carboxyl-containing unsaturated monomer of from 0.5 to 10 percent by weight, each based on the total amount of constitutive monomers; a water-insoluble crosslinking agent (B); an acetylenic diol compound (C); and a compound (D) represented by following Formula (I):

$$R^aO\text{-}(PO)_l\text{-}(EO)_m\text{-}(PO)_n\text{-}R^b \qquad (I)$$

wherein each of $R^a$ and $R^b$ independently represents a linear or branched-chain alkyl group or hydrogen atom; PO represents oxypropylene group; EO represents oxyethylene group; and each of 1, m, and n is independently a positive integer, where EO and POs are added in a block manner. The acetylenic diol compound (C) has a hydrophile-lypophile balance value (HLB value) of less than 13.

In the removable water-dispersible acrylic pressure-sensitive adhesive composition, the acrylic emulsion polymer (A) is preferably a polymer polymerized with a reactive emulsifier including a radically polymerizable functional group in molecule.

The water-insoluble crosslinking agent (B) may have a functional group reactive with carboxyl group, and the functional group may be present in a number of moles of from 0.3 to 1.3 moles per 1 mole of carboxyl group in the carboxyl-containing unsaturated monomer.

The present invention further provides, in another aspect, a pressure-sensitive adhesive sheet which includes a substrate; and a pressure-sensitive adhesive layer arranged on at least one side of the substrate and formed from the removable water-dispersible acrylic pressure-sensitive adhesive composition.

In the pressure-sensitive adhesive sheet, the pressure-sensitive adhesive layer preferably has a solvent-insoluble content of 90 percent by weight or more and an elongation at break of 200% or less.

The pressure-sensitive adhesive sheet may be used as or in a surface-protecting film for an optical element.

Advantageous Effects of Invention

The removable water-dispersible acrylic pressure-sensitive adhesive composition according to the present invention is dispersible in water and has the above configuration. Accordingly, a pressure-sensitive adhesive layer formed from the pressure-sensitive adhesive composition, and a pressure-sensitive adhesive sheet having the pressure-sensitive adhesive layer have satisfactory removability, high adhesiveness, and good appearances (good appearance characteristics), and less cause staining of the adherend surface after removal thereof (with satisfactory less-staining properties). They are resistant to increase in adhesive strength to the adherend with time and are resistant to whitening of the pressure-sensitive adhesive layer even when stored at high humidity. They are therefore useful for protecting the surfaces of optical films.

These and other objects, features, and advantages of the present invention will be more fully understood from the following description of embodiments.

## Description of Embodiments

The removable water-dispersible acrylic pressure-sensitive adhesive composition according to the present invention (hereinafter also simply referred to as "pressure-sensitive adhesive composition") contains, as essential components, an acrylic emulsion polymer (A), a water-insoluble crosslinking agent (B), an acetylenic diol compound (C), and a compound (D) represented by following Formula (I):

$$R^aO\text{-}(PO)_l\text{-}(EO)_m\text{-}(P)_n\text{-}R^b \qquad (I)$$

wherein each of $R^a$ and $R^b$ independently represents a linear or branched-chain alkyl group or hydrogen atom; PO represents oxypropylene group; EO represents oxyethylene group; and each of 1, m, and n is independently a positive integer, where EO and POs are added in a block manner.

The "compound (D) represented by Formula (I)" is also simply referred to as the "compound (D)."

[Acrylic Emulsion Polymer (A)]

The acrylic emulsion polymer (A) in the pressure-sensitive adhesive composition is a polymer including a (meth)acrylic alkyl ester and a carboxyl-containing unsaturated monomer as essential constitutive monomers (feed monomer components). Specifically, the acrylic emulsion polymer (A) is a polymer obtained from a monomer mixture including a (meth)acrylic alkyl ester and a carboxyl-containing unsaturated monomer as essential components. Each of different acrylic emulsion polymers (A) may be used alone or in combination. As used herein the term "(meth)acrylic" refers to "acrylic" and/or "methacrylic" ("acrylic" or "methacrylic," or both).

The (meth)acrylic alkyl ester is used as a principal monomer component constituting the acrylic emulsion polymer (A) and mainly plays the function of developing basic properties as a pressure-sensitive adhesive (or pressure-sensitive adhesive layer), such as adhesiveness and peelability (removability). Among such (meth)acrylic alkyl esters, acrylic alkyl esters tend to effectively impart flexibility to the polymer constituting the pressure-sensitive adhesive layer and to thereby exhibit the effect of allowing the pressure-sensitive adhesive layer to develop adhesion and tackiness; whereas methacrylic alkyl esters tend to impart hardness (rigidity) to the polymer constituting the pressure-sensitive adhesive layer and to exhibit the effects of controlling the removability of the pressure-sensitive adhesive layer. Examples of the (meth)acrylic alkyl esters include, but are not limited to, (meth)acrylic alkyl esters each having a linear, branched-chain, or cyclic alkyl group preferably having 1 to 16 carbon atoms, more preferably having 2 to 10 carbon atoms, and furthermore preferably having 4 to 8 carbon atoms.

Of acrylic alkyl esters, preferred are acrylic alkyl esters each having an alkyl group containing 2 to 14 (more preferably 4 to 8) carbon atoms, which are exemplified by acrylic alkyl esters each having a linear or branched-chain alkyl group, such as n-butyl acrylate, isobutyl acrylate, s-butyl acrylate, isoamyl acrylate, hexyl acrylate, heptyl acrylate, octyl acrylate, 2-ethylhexyl acrylate, isooctyl acrylate, nonyl acrylate, and isononyl acrylate. Among them, 2-ethylhexyl acrylate and n-butyl acrylate are preferred.

Of methacrylic alkyl esters, preferred are methacrylic alkyl esters each having an alkyl group containing 2 to 16 (more preferably 2 to 8) carbon atoms, which are exemplified by methacrylic alkyl esters each having a linear or branched-chain alkyl group, such as ethyl methacrylate, propyl methacrylate, isopropyl methacrylate, n-butyl methacrylate, isobutyl methacrylate, s-butyl methacrylate, and t-butyl methacrylate; and alicyclic methacrylic alkyl esters such as cyclohexyl methacrylate, bornyl methacrylate, and isobornyl methacrylate. Among them, n-butyl methacrylate is preferred.

The acrylic emulsion polymer (A) may employ methyl methacrylate and/or isobornyl acrylate for the purpose of improving the appearance of the pressure-sensitive adhesive layer described later.

The (meth)acrylic alkyl ester(s) may be suitably selected according typically to the target tackiness, and each of different (meth)acrylic alkyl esters may be used alone or in combination.

The acrylic emulsion polymer (A) contains the (meth)acrylic alkyl ester(s) in a content of typically from 70 to 99.5 percent by weight, more preferably from 85 to 99 percent by weight, and furthermore preferably from 91 to 98 percent by weight, based on the total amount (100 percent by weight) of constitutive monomers (total constitutive monomers) constituting the acrylic emulsion polymer (A). The (meth)acrylic alkyl ester(s), if present in a content of more than 99.5 percent by weight, may cause the pressure-sensitive adhesive composition to give a pressure-sensitive adhesive layer having insufficient anchoring capability, causing not so little staining, and having insufficient emulsion stability. This is because the relative content of the carboxyl-containing unsaturated monomer(s) in the constitutive monomers becomes low. In contrast, the (meth)acrylic alkyl ester(s), if present in a content of less than 70 percent by weight, may cause the pressure-sensitive adhesive layer to have insufficient adhesiveness and removability. Though not critical, acrylic alkyl esters and methacrylic alkyl esters may be contained in the (meth)acrylic alkyl esters in a ratio in content [ratio of the content of acrylic alkyl esters to the content of methacrylic alkyl esters (the content of acrylic alkyl esters: the content of methacrylic alkyl esters)] of preferably from 100:0 to 30:70 (by weight), and more preferably from 100:0 to 50:50.

The carboxyl-containing unsaturated monomer can exhibit the function of forming a protective layer on the surface of emulsion particles composed of the acrylic emulsion polymer. (A) to thereby prevent shear fracture of the emulsion particles. This function is further improved by neutralizing the carboxyl group with a base. The stability of the particles against shear fracture is more generally referred to as mechanical stability. Furthermore, one or more multifunctional compounds (e.g., multifunctional epoxy compounds) being reactive with carboxyl group may be used in combination with the carboxyl-containing unsaturated monomer. Consequently, the carboxyl-containing unsaturated monomer may act as crosslinking points during the formation of the pressure-sensitive adhesive layer through removal of water. In addition, the carboxyl-containing unsaturated monomer may increase the adhesion (anchoring capability) of the pressure-sensitive adhesive layer to the substrate through the multifunctional compounds. Examples of such carboxyl-containing unsaturated monomers include (meth)acrylic acid (acrylic acid, methacrylic acid), itaconic acid, maleic acid, fumaric acid, crotonic acid, carboxyethyl acrylate, and carboxypentyl acrylate. As used herein the "carboxyl-containing unsaturated monomer(s)" also include acid anhydride-containing unsaturated monomers such as maleic anhydride and itaconic anhydride. Among them, acrylic acid is preferred because of being liable to have a high relative concentration in the surface of the particles and to thereby form a denser protective layer. Each of such carboxyl-containing unsaturated monomers may be used alone or in combination.

The carboxyl-containing unsaturated monomer(s) is contained in a content of from 0.5 to 10 percent by weight, preferably from 1 to 5 percent by weight, and more preferably from 2 to 4 percent by weight, based on the total amount (100 percent by weight) of constitutive monomers (total constitutive monomers) constituting the acrylic emulsion polymer (A). The carboxyl-containing unsaturated monomer(s), if present in a content of more than 10 percent by weight, may undergo polymerization in water to cause thickening (increase in viscosity), because such carboxyl-containing unsaturated monomers (e.g., acrylic acid) are generally soluble in water. In addition, the pressure-sensitive adhesive layer in this case may have, after its formation, increasing interaction with a functional group on the surface of the adherend (e.g., an optical element such as polarizing plate) and thereby have an increasing adhesive strength with time, and this may impede removal of the pressure-sensitive adhesive layer from the adherend. In contrast, the carboxyl-containing unsaturated monomer(s), if present in a content of less than 0.5 percent by weight, may cause the emulsion particles to have insufficient mechanical stability and may invite insufficient adhesion (insufficient anchoring capability) between the pressure-sensitive adhesive layer and the substrate, thus causing adhesive residue.

Monomer components (constitutive monomers) constituting the acrylic emulsion polymer (A) may further include one or more additional monomer components for imparting a specific function, in combination with the (meth)acrylic alkyl ester(s) and the carboxyl-containing unsaturated monomer(s). As such monomer components, amido-containing monomers (e.g., (meth)acrylamide, N,N-diethyl(meth)acrylamide, and N-isopropyl(meth)acrylamide) and/or amino-containing monomers (e.g., N,N-dimethylaminoethyl (meth)acrylate and N,N-dimethylaminopropyl (meth)acrylate) may be added (used) in an amount per each category of from 0.1 to 15 percent by weight, for the purpose of increasing cohesive strength. Typically for adjusting refractive index and/or for improving reworkability, (meth)acrylic aryl esters such as phenyl (meth)acrylate; vinyl esters such as vinyl acetate and vinyl propionate; and styrenic monomers such as styrene may be added (used) in an amount per each category of 15 percent by weight or less. For improving crosslinking in the emulsion particles and improving cohesive strength, epoxy-containing monomers such as glycidyl (meth)acrylate and allyl glycidyl ether; and/or multifunctional monomers such as trimethylolpropane tri(meth)acrylate and divinylbenzene may be added (used) in an amount per each category of less than 5 percent by weight. For forming hydrazide crosslinks with a combination use of a hydrazide crosslinking agent and thereby particularly improving less-staining properties, keto-containing unsaturated monomers such as diacetoneacrylamide (DAAM), allyl acetoacetate, and 2-(acetoacetoxy) ethyl (meth)acrylate may be added (used) in an amount of less than 10 percent by weight (preferably from 0.5 to 5 percent by weight).

In addition, a hydroxyl-containing unsaturated monomer may be used as the additional monomer component. Examples thereof include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth) acrylate, (4-hydroxymethylcyclohexyl)methyl acrylate, N-methylol (meth) acrylamide, vinyl alcohol, allyl alcohol, 2-hydroxyethyl vinyl ether, 4-hydroxybutyl vinyl ether, and diethylene glycol monovinyl ether. The amount of such hydroxyl-containing unsaturated monomers to be added (to be used) is preferably minimized from the viewpoint of further reducing whitening staining. Specifically, the constitutive monomers for constituting the acrylic emulsion polymer (A) contain a hydroxyl-containing unsaturated monomer in an amount of preferably less than 1 percent by weight, more preferably less than 0.1 percent by weight, and furthermore preferably, the constitutive monomers contain substantially no hydroxyl-containing unsaturated monomer (e.g., in a content of less than 0.05 percent by weight). However, such a hydroxyl-containing unsaturated monomer may be added (used) in an amount of from about 0.01 to about 10 percent by weight when used for the purpose of introducing crosslinking points typically of crosslinking between hydroxyl group and isocyanate group or metal crosslinking.

The amounts of the additional monomer components to be added (to be used) are indicated as contents based on the total amount (100 percent by weight) of constitutive monomers (total constitutive monomers) constituting the acrylic emulsion polymer (A).

In particular, at least one monomer selected from the group consisting of methyl methacrylate, isobornyl acrylate, N,N-diethylacrylamide, and vinyl acetate is preferably used as a monomer component (constitutive monomer) constituting the acrylic emulsion polymer (A) from the viewpoint of improving the appearance of a pressure-sensitive adhesive sheet (pressure-sensitive adhesive layer) obtained from the pressure-sensitive adhesive composition. Among them, methyl methacrylate is particularly preferably used. The content of the monomer(s) (monomer(s) selected from the group consisting of methyl methacrylate, isobornyl acrylate, N,N-diethylacrylamide, and vinyl acetate) is preferably from 0.5 to 15 percent by weight, more preferably from 1 to 10 percent by weight, and furthermore preferably from 2 to 5 percent by weight, based on the total amount (100 percent by weight) of constitutive monomers (total constitutive monomers) constituting the acrylic emulsion polymer (A). The monomer(s), if present in a content of less than 0.5 percent by weight, may not effectively help the pressure-sensitive adhesive layer to have an improved appearance. In contrast, the monomer, if present in a content of more than 15 percent by weight, may cause the polymer constituting the pressure-sensitive adhesive layer to be excessively rigid and may thereby cause insufficient adhesion. When two or more monomers selected from the group consisting of methyl methacrylate, isobornyl acrylate, N,N-diethylacrylamide, and vinyl acetate are contained in the constitutive monomers constituting the acrylic emulsion polymer (A), the total amount (total content)

of methyl methacrylate, isobornyl acrylate, N,N-diethylacrylamide, and vinyl acetate may fall within the above-specified range.

The acrylic emulsion polymer (A) for use in the present invention may be obtained by emulsion polymerization of the constitutive monomers (monomer mixture) using an emulsifier and a polymerization initiator. In addition, a chain-transfer agent may be used so as to regulate the molecular weight of the acrylic emulsion polymer (A).

The emulsifier for use in emulsion polymerization to form the acrylic emulsion polymer (A) is preferably a reactive emulsifier including a radically polymerizable functional group introduced into the molecule (reactive emulsifier containing a radically polymerizable functional group). Each of different emulsifiers may be used alone or in combination.

The reactive emulsifier containing a radically polymerizable functional group (hereinafter simply referred to as "reactive emulsifier") is an emulsifier containing at least one radically polymerizable functional group in the molecule (per molecule). Examples of the reactive emulsifier include, but are not limited to, reactive emulsifiers having radically polymerizable functional group(s) such as vinyl group, propenyl group, isopropenyl group, vinyl ether group (vinyloxy group), and allyl ether group (allyloxy group). Each of different reactive emulsifiers may be used alone or in combination. The reactive emulsifier, when used, is taken into the polymer, and this reduces staining derived from the emulsifier, thus being preferred.

Examples of the reactive emulsifiers include reactive emulsifiers each having a structure (or corresponding to the structure) of a nonionic-anionic emulsifier (anionic emulsifier having a nonionic hydrophilic group), except with an introduced radically polymerizable functional group (radically reactive group) such as propenyl group or allyl ether group. Exemplary nonionic-anionic emulsifiers include sodium polyoxyethylene alkyl ether sulfates, ammonium polyoxyethylene alkyl phenyl ether sulfates, sodium polyoxyethylene alkyl phenyl ether sulfates, and sodium polyoxyethylene alkyl sulfosuccinates. Hereinafter a reactive emulsifier having a structure corresponding to an anionic emulsifier, except with a radically polymerizable functional group being introduced, is referred to as an "anionic reactive emulsifier"; whereas a reactive emulsifier having a structure corresponding to a nonionic-anionic emulsifier, except with a radically polymerizable functional group being introduced, is referred to as a "nonionic-anionic reactive emulsifier."

Among them, anionic reactive emulsifiers are preferred, of which nonionic-anionic reactive emulsifiers are more preferred, because these emulsifiers will be taken into the polymer to improve less-staining properties. When the water-insoluble crosslinking agent (B) is a multifunctional epoxy crosslinking agent having epoxy group(s), such an anionic reactive emulsifier, as having catalytic activity, helps the crosslinking agent to have higher reactivity.
When no anionic reactive emulsifier is used, the crosslinking reaction may not be completed even through aging, and this may cause the pressure-sensitive adhesive layer to have an adhesive strength varying with time; and, in addition, unreacted carboxyl groups may cause the pressure-sensitive adhesive layer to have an increasing adhesive strength to the adherend with time. The anionic reactive emulsifiers are also preferred because they are taken into the polymer, thereby do not precipitate to the surface of the adherend, and cannot cause whitening staining, unlike quaternary ammonium compounds (e.g., see Japanese Unexamined Patent Application Publication (JP-A) No. 2007-31585) which are generally used as catalysts for epoxy crosslinking agents and precipitate to the surface of the adherend.

As the reactive emulsifiers, commercial products may also be used, which are exemplified by products under the trade name "ADEKA REASOAP SE-10N" (ADEKA CORPORATION), the trade name "ADEKA REASOAP SE-20N" (ADEKA CORPORATION), the trade name "ADEKA REASOAP SR-10" (ADEKA CORPORATION), the trade name "ADEKA REASOAP SR-20" (ADEKA CORPORATION), the trade name "AQUALON HS-10" (Dai-ichi Kogyo Seiyaku Co., Ltd.), the trade name "AQUALON HS-05" (Dai-ichi Kogyo Seiyaku Co., Ltd.), and the trade name "LATEMUL PD-104" (Kao Corporation).

The emulsifier for use herein is preferably one having a $SO_4^{2-}$ ion concentration of 100 $\mu$g/g or less, from which impurity ions have been removed, because such impurity ions may become a problem. In the case of an anionic emulsifier, an ammonium salt emulsifier is desirably used. Impurities may be removed from the emulsifier according to a suitable process such as a process using an ion-exchange resin, a membrane separation process, or a process of precipitating impurities using an alcohol and removing the precipitates by filtration.

The reactive emulsifier may be blended (used) in an amount of preferably from 0.1 to 10 parts by weight, more preferably from 0.5 to 6 parts by weight, furthermore preferably from 1 to 4.5 parts by weight, and most preferably from 1 to 3 parts by weight, per 100 parts by weight of the total amount of constitutive monomers (total constitutive monomers) constituting the acrylic emulsion polymer (A). The reactive emulsifier, if used in an amount of more than 10 parts by weight, may cause the pressure-sensitive adhesive (pressure-sensitive adhesive layer) to have an insufficient cohesive strength, resulting in increased staining to the adherend or resulting in migration and staining of the emulsifier to the adherend. In contrast, the reactive emulsifier, if used in an amount of less than 0.1 part by weight, may not sufficiently help to maintain stable emulsification.

Though not limited, exemplary polymerization initiators usable in emulsion polymerization to form the acrylic emulsion polymer (A) include azo polymerization initiators such as 2,2'-azobisisobutyronitrile, 2,2'-azobis (2-amidinopropane) dihydrochloride, 2,2'-azobis [2-(5-methyl-2-imidazolin-2-yl)propane] dihydrochloride, 2,2'-azobis (2-methylpropionamidine) disulfate, and 2,2'-azobis (N,N'-dimethylene isobutyramidine); persulfate polymerization initiators such as

potassium persulfate and ammonium persulfate; peroxide polymerization initiators such as benzoyl peroxide, t-butyl hydroperoxide, and hydrogen peroxide; redox polymerization initiators each including a peroxide and a reducing agent, such as redox polymerization initiators using a peroxide and ascorbic acid in combination (e.g., one using a hydrogen peroxide solution and ascorbic acid in combination), those using a peroxide and an iron(II) salt in combination (e.g., one using a hydrogen peroxide solution and an iron(II) salt in combination), and those using a persulfate and sodium hydrogen sulfite in combination. Each of different polymerization initiators may be used alone or in combination.

The amount of the polymerization initiator(s) to be incorporated (to be used) may be determined as appropriate according typically to the types of the initiator and the constitutive monomers and is not limited, but is preferably from 0.01 to 1 part by weight, and more preferably from 0.02 to 0.5 part by weight, per 100 parts by weight of the total amount of constitutive monomers (total constitutive monomers) for constituting the acrylic emulsion polymer (A).

Polymerization to form the acrylic emulsion polymer (A) may employ a chain-transfer agent so as to regulate the molecular weight of the acrylic emulsion polymer (A). The chain-transfer agent is not limited, can be any of known or customary chain-transfer agents, which are exemplified by lauryl mercaptan, glycidyl mercaptan, mercaptoacetic acid, 2-mercaptoethanol, thioglycolic acid, 2-ethylhexyl thioglycolate, and 2,3-dimercapto-1-propanol. Each of different chain-transfer agents may be used alone or in combination. The chain-transfer agent(s) may be incorporated (used) in an amount of preferably from 0.001 to 0.5 part by weight, per 100 parts by weight of the total amount of constitutive monomers (total constitutive monomers) constituting the acrylic emulsion polymer (A).

Emulsion polymerization to form the acrylic emulsion polymer (A) may be performed by any process not limited, such as regular batch polymerization, continuous dropping polymerization, or portion-wise dropping polymerization. From the viewpoint of less staining, the emulsion polymerization is preferably performed according to batch polymerization at a low temperature (e.g., 55°C or lower, and more preferably 30°C or lower). This is probably because polymerization, when performed under these conditions, is liable to give a polymer including high-molecular-weight components in large amounts with less amounts of low-molecular-weight components, and this may reduce staining.

The acrylic emulsion polymer (A) is a polymer including, as essential constitutional units, constitutional units derived from the (meth)acrylic alkyl ester, and constitutional units derived from the carboxyl-containing unsaturated monomer. The constitutional units derived from the (meth)acrylic alkyl ester are contained in the acrylic emulsion polymer (A) in a content of preferably from 70 to 99.5 percent by weight, more preferably from 85 to 99 percent by weight, and furthermore preferably from 91 to 98 percent by weight. The constitutional units derived from the carboxyl-containing unsaturated monomer are contained in the acrylic emulsion polymer (A) in a content of preferably from 0.5 to 10 percent by weight, more preferably from 1 to 5 percent by weight, and furthermore preferably from 2 to 4 percent by weight.

The acrylic emulsion polymer (A) has a solvent-insoluble content (content of solvent-insoluble matter, also referred to as "gel fraction") of preferably 70% (percent by weight) or more, more preferably 75 percent by weight or more, and furthermore preferably 80 percent by weight or more. The acrylic emulsion polymer (A), if having a solvent-insoluble content of less than 70 percent by weight, may contain large amounts of low-molecular-weight components, such large amounts of low-molecular-weight components may not be sufficiently reduced by the action of crosslinking alone and may thereby remain in the pressure-sensitive adhesive layer. The residual low-molecular-weight components may cause staining on the adherend or may cause the pressure-sensitive adhesive layer to have an excessively high adhesive strength. The solvent-insoluble content may be controlled by choosing or setting the polymerization initiator, the reaction temperature, and types of the emulsifier and constitutive monomers. Though not limited, the upper limit of the solvent-insoluble content is, for example, about 99 percent by weight.

As used herein the term "solvent-insoluble content" of the acrylic emulsion polymer (A) refers to a value as determined by calculation according to the following "method for measuring solvent-insoluble content."

Method for Measuring Solvent-Insoluble Content

About 0.1 g of the acrylic emulsion polymer (A) is sampled to give a specimen, the specimen is covered by a porous tetrafluoroethylene sheet (trade name "NTF1122" supplied by Nitto Denko Corporation) having an average pore size of 0.2 μm, tied with a kite string, and the weight of the resulting article is measured and defined as a "weight before immersion." The weight before immersion is the total weight of the acrylic emulsion polymer (A) (the sampled specimen), the tetrafluoroethylene sheet, and the kite string. Independently, the total weight of the tetrafluoroethylene sheet and the kite string is measured and defined as a "tare weight."

Next, the specimen acrylic emulsion polymer (A) covered by the tetrafluoroethylene sheet and tied with the kite string (this article is hereinafter referred to as "sample") is placed in ethyl acetate filled in a 50-ml vessel, and left stand therein at 23°C for 7 days. The sample (after treatment with ethyl acetate) is retrieved from the vessel, transferred to an aluminum cup, dried in a drier at 130°C for 2 hours to remove ethyl acetate, and the weight of the resulting sample is measured and defined as a "weight after immersion."

The solvent-insoluble content is calculated according to the following equation:

Solvent-insoluble content (percent by weight) = (a-b)/(c-b) × 100 (1)

wherein "a" represents the weight after immersion; "b" represents the tare weight; and "c" represents the weight before immersion.

Though not critical, the content of the acrylic emulsion polymer (A) in the pressure-sensitive adhesive composition is preferably 80 percent by weight or more, and more preferably from 90 to 99 percent by weight, based on the total weight (100 percent by weight) of non-volatile components in the pressure-sensitive adhesive composition.

[Water-Insoluble Crosslinking Agent (B)]

The water-insoluble crosslinking agent (B) for use in the pressure-sensitive adhesive composition is a water-insoluble compound and is a compound having two or more (e.g., two to six) functional groups reactive with carboxyl group (hereinafter also referred to as carboxyl-reactive functional groups) in the molecule (per molecule). Though not critical, the number of such carboxyl-reactive functional groups per molecule is preferably from 3 to 5. With an increasing number of carboxyl-reactive functional groups per molecule, the pressure-sensitive adhesive composition undergoes denser crosslinking, specifically, the polymer constituting the pressure-sensitive adhesive layer has a denser crosslinking structure. This enables the prevention of spread by wetting of the pressure-sensitive adhesive layer after its formation. In addition, such dense crosslinking structure constrains the polymer constituting the pressure-sensitive adhesive layer and thereby prevents increase in adhesive strength between the pressure-sensitive adhesive layer and the adherend with time due to segregation of the functional groups (carboxyl groups) in the pressure-sensitive adhesive layer to the surface in contact with the adherend. In contrast, the water-insoluble crosslinking agent (B), if having a number of carboxyl-reactive functional groups per molecule of more than 6, may cause the formation of a gelled substance.

Exemplary carboxyl-reactive functional groups to be contained in the water-insoluble crosslinking agent (B) include, but are not limited to, epoxy groups, isocyanate groups, and carbodiimide groups. Among them, epoxy groups are preferred from the viewpoint of reactivity. Of such epoxy groups, glycidylamino group is more preferred, because the glycidylamino group is highly reactive, thereby less causes a substance unreacted in the crosslinking reaction to remain, thus contributes to less-staining properties, and prevents increase with time in adhesive strength to the adherend due to the presence of unreacted carboxyl groups in the pressure-sensitive adhesive layer. Specifically, the water-insoluble crosslinking agent (B) is preferably any of epoxy crosslinking agents each having an epoxy group, of which crosslinking agents each having a glycidylamino group (glycidylamino crosslinking agents) are more preferred. The water-insoluble crosslinking agent (B), when being an epoxy crosslinking agent (particularly glycidylamino crosslinking agent), contains epoxy groups (particularly glycidylamino groups) in a number of preferably 2 or more (e.g., from 2 to 6), and more preferably from 3 to 5 per molecule.

The water-insoluble crosslinking agent (B) is a water-insoluble compound. As used herein the term "water-insoluble" refers to that the compound (crosslinking agent) has a solubility at 25°C in 100 parts by weight of water (weight of the compound (crosslinking agent) soluble in 100 parts by weight of water) of 5 parts by weight or less. The solubility is preferably 3 parts by weight or less, and more preferably 2 parts by weight or less. Such a water-insoluble crosslinking agent, when used, hardly causes whitening staining and thereby helps the pressure-sensitive adhesive layer to further less stain. The whitening staining is caused on the adherend in a high-humidity environment by a crosslinking agent which has not undergone crosslinking and remains in the resulting polymer. Crosslinking, when performed by using a water-soluble crosslinking agent alone as a crosslinking agent, tends to cause whitening staining in a high-humidity environment, because a residual crosslinking agent is liable to be dissolved in water and to migrate into the adherend. In addition, a water-insoluble crosslinking agent more contributes to the crosslinking reaction (reaction with carboxyl group) and more effectively suppresses increase in adhesive strength with time, as compared to a water-soluble crosslinking agent. A water-insoluble crosslinking agent has high reactivity in a crosslinking reaction, thereby allows the crosslinking reaction to proceed rapidly during aging, and suppresses increase in adhesive strength to the adherend with time. Such increase in adhesive strength is caused by unreacted carboxyl groups in the pressure-sensitive adhesive layer.

The solubility of the crosslinking agent in water may be measured typically in the following manner.

Method for Measuring Solubility in Water

Water (25°C) and the sample crosslinking agent in an equal weight are mixed with a stirrer at 300 revolutions per minute (rpm) for 10 minutes, and the mixture is separated into an aqueous phase and an oily phase by centrifugal separation. Next, the aqueous phases are collected, dried at 120°C for 1 hour, a weight loss on drying is determined, from which a non-volatile content (weight of non-volatile components in parts by weight per 100 parts by weight of water) in the aqueous phases is determined.

Specific examples of the water-insoluble crosslinking agent (B) include glycidylamino crosslinking agents such as 1,3-bis (N,N-diglycidylaminomethyl) cyclohexane (e.g., trade name "TETRAD-C" supplied by Mitsubishi Gas Chemical

Company, Inc.) [having a solubility of 2 parts by weight or less per 100 parts by weight of water at 25°C], 1,3-bis (N,N-diglycidylaminomethyl)benzene (e.g., trade name "TETRAD-X" supplied by Mitsubishi Gas Chemical Company, Inc.) [having a solubility of 2 parts by weight or less per 100 parts by weight of water at 25°C]; and other epoxy crosslinking agents such as Tris (2,3-epoxypropyl) isocyanurate (e.g., trade name "TEPIC-G" supplied by Nissan Chemical Industries, Ltd.) [having a solubility of 2 parts by weight or less per 100 parts by weight of water at 25°C]. Each of the water-insoluble crosslinking agents (B) may be used alone or in combination.

Incorporation of the water-insoluble crosslinking agent (B) during the preparation of the pressure-sensitive adhesive composition may be performed by adding (incorporating) the water-insoluble crosslinking agent (B) as intact, or by adding the water-insoluble crosslinking agent (B) after being dissolved in and/or diluted with an organic solvent. In the latter case, however, the amount of the organic solvent is preferably minimized. Addition of the water-insoluble crosslinking agent (B) after being emulsified with an emulsifier is not preferred, because the emulsifier tends to bleed out and to cause staining (particularly whitening staining).

The amount (content in the pressure-sensitive adhesive composition) of the water-insoluble crosslinking agent (s) (B) is preferably such that the number of moles of carboxyl-reactive functional groups of the water-insoluble crosslinking agent(s) (B) be from 0.3 to 1.3 moles per 1 mole of carboxyl groups of the carboxyl-containing unsaturated monomer (s) used as a constitutive monomer for the acrylic emulsion polymer (A). Specifically, the ratio [(carboxyl-reactive functional groups)/(carboxyl groups)] (molar ratio) of the "total number of moles of carboxyl-reactive functional groups in total water-insoluble crosslinking agents (B)" to the "total number of moles of carboxyl groups in total carboxyl-containing unsaturated monomers used as constitutive monomers for the acrylic emulsion polymer (A)" is preferably from 0.3 to 1.3, more preferably from 0.4 to 1.1, and furthermore preferably from 0.5 to 1.0. When the ratio [(carboxyl-reactive functional groups)/(carboxyl groups)] is less than 0.3, unreacted carboxyl groups may remain in a large amount in the pressure-sensitive adhesive layer, and this may cause increase in adhesive strength with time due to interactions between the carboxyl groups and the adherend. In contrast, if the ratio is more than 1.3, unreacted water-insoluble crosslinking agent (s) (B) may remain in a large amount in the pressure-sensitive adhesive layer, and this may cause appearance defects.

Particularly when the water-insoluble crosslinking agent (B) is an epoxy crosslinking agent, the ratio [(epoxy groups)/(carboxyl groups)] (molar ratio) is preferably from 0.3 to 1.3, more preferably from 0.4 to 1.1, and furthermore preferably from 0.5 to 1.0. When the water-insoluble crosslinking agent (B) is a glycidylamino crosslinking agent, the ratio [(glycidylamino groups)/(carboxyl groups)] (molar ratio) preferably falls within the above range.

For example, when a water-insoluble crosslinking agent (B) having a functional-group equivalent of carboxyl-reactive functional groups of 110 (g/eq) is added (incorporated) in an amount of 4 grams to the pressure-sensitive adhesive composition, the number of moles of carboxyl-reactive functional groups possessed by the water-insoluble crosslinking agent (B) may for example be calculated according to the following equation:

Number of moles of carboxyl-reactive functional groups of water-insoluble crosslinking agent (B) = [Amount of water-insoluble crosslinking agent (B) to be added (incorporated)]/[Functional-group equivalent] = 4/110

Further for example, when an epoxy crosslinking agent having an epoxy equivalent of 110 (g/eq) is added (incorporated) in an amount of 4 grams as the water-insoluble crosslinking agent (B), the number of moles of epoxy groups of the epoxy crosslinking agent may for example be calculated according to the following equation:

Number of moles of epoxy groups of epoxy crosslinking agent = [Amount of epoxy crosslinking agent to be added (incorporated)]/[Epoxy equivalent] = 4/110

[Acetylenic diol Compound (C)]

The acetylenic diol compound (C) in the pressure-sensitive adhesive composition is a diol compound having an acetylene bond in the molecule. Preferred examples of the acetylenic diol compound (C) include, but are not limited

to, compounds represented by following Formula (II), and compounds represented by following Formula (III).

Specifically, preferred examples of the acetylenic diol compound (C) include compounds represented by following Formula (II):

[Chem. 1]

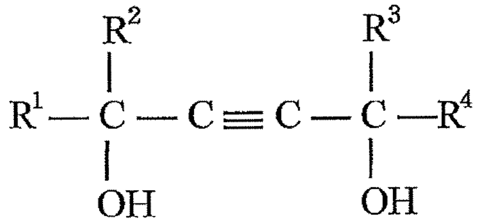

(II)

In Formula (II), each of $R^1$, $R^2$, $R^3$, and $R^4$ independently represents a hydrocarbon group having 1 to 20 carbon atoms which may contain one or more heteroatoms. The substituents $R^1$, $R^2$, $R^3$, and $R^4$ may be the same as or different from one another.

Each of $R^1$, $R^2$, $R^3$, and $R^4$ in Formula (II) may have a linear or branched chain structure. Among them, $R^1$ and $R^4$ are preferably any of alkyl groups each having 2 to 10 carbon atoms, and more preferably any of those having 4 carbon atoms, i.e., n-butyl group, sec-butyl group, tert-butyl group, and isobutyl group. The substituents $R^2$ and $R^3$ are preferably any of alkyl groups having 1 to 4 carbon atoms, and more preferably any of those having 1 or 2 carbon atoms, i.e., methyl group and ethyl group.

Specific examples of the acetylenic diol compounds (C) represented by Formula (II) include 7,10-dimethyl-8-hexadecyne-7,10-diol, 4,7-dimethyl-5-decyne-4,7-diol, 2,4,7,9-tetramethyl-5-decyne-4,7-diol, and 3,6-dimethyl-4-octyne-3,6-diol.

The acetylenic diol compound(s) (C) represented by Formula (II), when incorporated upon the preparation of the pressure-sensitive adhesive composition, may be used as a dispersion or solution in a solvent, for higher workability in incorporation. Exemplary solvents herein include 2-ethylhexanol, butyl cellosolve, dipropylene glycol, ethylene glycol, propylene glycol, n-propyl alcohol, and isopropyl alcohol. Among such solvents, ethylene glycol and/or propylene glycol is preferably used for satisfactory dispersibility in the emulsion system. The content of the solvent in the dispersion or solution for use in incorporation is preferably less than 40 percent by weight (e.g., from 15 to 35 percent by weight) upon the use of ethylene glycol as the solvent, and is preferably less than 70 percent by weight (e.g., from 20 to 60 percent by weight) upon the use of propylene glycol as the solvent, each based on the total amount (100 percent by weight) of the dispersion or solution of the acetylenic diol compound(s) (C).

The acetylenic diol compound (C) represented by Formula (II) may be a commercial product, such as Surfynol 104 Series products supplied by Air Products and Chemicals Inc., which are exemplified by Surfynol 104E, Surfynol 104H, Surfynol 104A, Surfynol 104BC, Surfynol 104DPM, Surfynol 104PA, and Surfynol 104PG-50.

Preferred examples of the acetylenic diol compound (C) further include compounds represented by following Formula (III):

[Chem. 2]

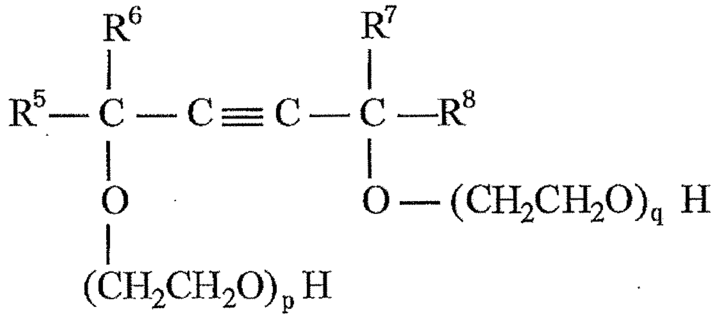

(III)

In Formula (III), each of $R^5$, $R^6$, $R^7$, and $R^8$ independently represents a hydrocarbon group having 1 to 20 carbon atoms which may contain one or more heteroatoms. The substituents $R^5$, $R^6$, $R^7$, and $R^8$ may be the same as or different from one another. In Formula (III), each of p and q is independently an integer of 0 or more, where the total of p and q [p+q] is 1 or more, preferably from 1 to 20, and more preferably from 1 to 9. The repetition numbers p and q may be the same as or different from each other. The repetition numbers p and q are regulated so that the acetylenic diol compound (C) has a HLB value of less than 13. When p is 0, $[-O-(CH_2CH_2O)_pH]$ is hydroxyl group [-OH]; and the same is true for q.

In Formula (III), each of $R^5$, $R^6$, $R^7$, and $R^8$ may independently have a linear or branched chain structure. Among them, $R^5$ and $R^8$ are preferably any of alkyl groups having 2 to 10 carbon atoms, and more preferably any of those having 4 carbon atoms, i.e., n-butyl group, sec-butyl group, tert-butyl group, and isobutyl group. The substituents $R^6$ and $R^7$ are preferably any of alkyl groups having 1 to 4 carbon atoms, and more preferably any of those having 1 or 2 carbon atoms, i.e., methyl group and ethyl group.

Specific examples of the acetylenic diol compounds (C) represented by Formula (III) include an ethylene oxide adduct of 7,10-dimethyl-8-hexadecyne-7,10-diol, an ethylene oxide adduct of 4,7-dimethyl-5-decyne-4,7-diol, an ethylene oxide adduct of 2,4,7,9-tetramethyl-5-decyne-4,7-diol, and an ethylene oxide adduct of 3,6-dimethyl-4-octyne-3,6-diol. The average molar number of ethylene oxide added in the ethylene oxide adduct of 2,4,7,9-tetramethyl-5-decyne-4,7-diol is preferably 9 or less.

The repetition numbers p and q in Formula (III) are numbers regulated so that the acetylenic diol compound (C) has a HLB value of less than 13. Typically when the acetylenic diol compound (C) represented by Formula (III) is an ethylene oxide adduct of 2,4,7,9-tetramethyl-5-decyne-4,7-diol, the total of p and q is preferably 9 or less.

The acetylenic diol compound (C) represented by Formula (III) (ethylene-oxide-added acetylenic diol compound), when incorporated upon preparation of the pressure-sensitive adhesive composition, is preferably incorporated alone without the use of solvents. However, typically for higher workability in incorporation, the acetylenic diol compound (C) may be used as a dispersion or solution in a solvent. Exemplary solvents herein include 2-ethylhexanol, butyl cellosolve, dipropylene glycol, ethylene glycol, propylene glycol, n-propyl alcohol, and isopropyl alcohol. Among such solvents, ethylene glycol and/or propylene glycol is preferably used for satisfactory dispersibility in the emulsion system

The acetylenic diol compound (C) represented by Formula (III) may be a commercial product, such as Surfynol 400 Series products supplied by Air Products and Chemicals Inc., which are exemplified by Surfynol 420 and Surfynol 440.

Each of different acetylenic diol compounds (C) may be used alone or in combination.

The acetylenic diol compound (C) has a HLB value (hereinafter also simply referred to as "HLB") of less than 13, preferably from 1 to 10, more preferably from 3 to 8, and furthermore preferably from 3 to 5. An acetylenic diol compound having a HLB value of 13 or more may often cause the pressure-sensitive adhesive layer to suffer from whitening in a high-humidity environment and to more stain the adherend. The HLB value is a hydrophile-lypophile balance as defined by Griffin, which indicates the degree of affinity of a surfactant for water and for oils. The definition of the HLB values is described by W.C. Griffin in J. Soc. Cosmetic Chemists, 1, 311 (1949) and by Koshitami TAKAHASHI, Yoshiro NAMBA, Motoo KOIKE, and Masao KOBAYASHI in "Handbook of Surfactants," 3rd Ed., Kogaku Tosho K.K., Tokyo Japan, November 25, 1972, pp. 179-182.

The acetylenic diol compound(s) (C) is incorporated in an amount (content in the pressure-sensitive adhesive composition) of preferably from 0.01 to 10 parts by weight, more preferably from 0.1 to 7 parts by weight, and furthermore preferably from 0.5 to 5 parts by weight, per 100 parts by weight of the acrylic emulsion polymer (A). The acetylenic diol compound(s) (C), if in an amount of less than 0.01 part by weight, may not sufficiently help to suppress appearance defects of dimples caused by the water-insoluble crosslinking agent. In contrast, the acetylenic diol compound(s) (C), if in an amount of more than 10 parts by weight, may stain the adherend.

The acetylenic diol compound(s) (C), when incorporated, may suppress the generation of dimple defects derived from the water-insoluble crosslinking agent. This is probably because the acetylenic diol compound(s) (C) effectively helps the water-insoluble crosslinking agent to be dispersed more satisfactorily in the pressure-sensitive adhesive composition and helps to level the pressure-sensitive adhesive layer effectively upon its formation.

[Compound (D)]

The compound (D) in the pressure-sensitive adhesive composition is a compound represented by following Formula (I):

$$R^aO-(PO)_l-(EO)_n-(PO)_n-R^b \qquad (I)$$

As used herein the symbol "PO" represents oxypropylene group $[-CH_2CH(CH_3)O-]$; and the symbol "EO" represents oxyethylene group $[-CH_2CH_2O-]$.

In Formula (I), each of $R^a$ and $R^b$ independently represents a linear or branched-chain alkyl group, or hydrogen

atom. The substituents $R^a$ and $R^b$ may be the same as or different from each other. Of linear or branched-chain alkyl groups, preferred are alkyl groups each having 1 to 4 carbon atoms, such as methyl group, ethyl group, propyl group, and butyl group, though not limited. Above all, $R^a$ and $R^b$ are preferably both hydrogen atoms.

In Formula (I), PO represents oxypropylene group [$-CH_2CH(CH_3)O-$]; each of 1 and n is independently a positive integer (an integer of 1 or more) and is preferably from 1 to 100, more preferably from 10 to 50, and furthermore preferably from 10 to 30. The repetition numbers 1 and n may be the same as or different from each other.

In Formula (I), EO represents oxyethylene group [$-CH_2CH_2O-$]; and m is a positive integer (an integer of 1 or more) and is preferably from 1 to 50, more preferably from 1 to 30, and furthermore preferably from 1 to 15.

In Formula (I), EO and POs are added (copolymerized) in a block manner. Specifically, the compound (D) is a triblock copolymer having a block composed of EO [polyoxyethylene block or polyethylene glycol (PEG) block] and, on both sides of the EO block, blocks each composed of PO [polyoxypropylene blocks or polypropylene glycol (PPG) blocks], or a derivative of the triblock copolymer.

The compound (D) has a ratio of the "total weight of EOs" to the "total weight of the compound(s) (D)" [(total weight of EOs)/(total weight of the compound(s) (D))$\times$100] (in unit of percent by weight (%)) of preferably 50 percent by weight or less, more preferably from 5 to 50 percent by weight, and furthermore preferably from 10 to 30 percent by weight. The compound(s) (D), if having the ratio (EO content) of more than 50 percent by weight, may have excessively high hydrophilicity and may thereby lose defoaming activity. In contrast, the compound(s) (D), if having the ratio of less than 5 percent by weight, may have excessively high hydrophobicity and may thereby cause crawling. As used herein the term "total weight of the compound(s) (D)" refers to the "total sum of weights of all compounds (D) contained in the pressure-sensitive adhesive composition"; whereas the term "total weight of EOs" refers to the "total sum of weights of EOs in the total compounds (D) contained in the pressure-sensitive adhesive composition." The ratio of the "total weight of EOs" to the "total weight of the compound(s) (D)" is also referred to as "ethylene oxide content" or "EO content." Exemplary techniques for the measurement of the EO content include nuclear magnetic resonance (NMR) analysis, chromatography, or time-of-flight secondary ion mass spectrometry (TOF-SIMS).

The compound (D) has a number-average molecular weight (Mn) of preferably from 1200 to 4000, and more preferably from 1500 to 3500. The compound (D), if having a Mn of more than 4000 or if having a Mn of less than 1200, may cause staining to the adherend. The "number-average molecular weight (Mn)" refers to the number-average molecular weight of all compounds (D) contained in the pressure-sensitive adhesive composition. As used herein the term "number-average molecular weight (Mn)" refers to a value determined by measurement through gel permeation chromatography (GPC). Typically, the number-average molecular weight (Mn) may be measured according to the following measuring method.

[Measuring Method]

The molecular weight is determined in terms of polystyrene standard measured with the GPC system "HLC-8220GPC" supplied by Tosoh Corporation under the following measurement conditions:

Sample concentration: 0.2 percent by weight
(tetrahydrofuran (THF) solution)
Sample injection volume: 10 μl
Eluting solvent: THF
Flow rate: 0.6 ml/min
Measurement temperature: 40°C
Column: sample column; one TSKguardcolumn SuperHZ-H column and two TSKgel SuperHZM-H columns
reference column; one TSKgel SuperH-RC column
Detector: differential refractive index detector

Each of the compounds (D) may be obtained, for example, by reacting a fatty acid or a higher alcohol with ethylene oxide and propylene oxide or may be obtained by reacting ethylene glycol and propylene glycol with each other.

The compounds (D) may be commercial products such as trade names "ADEKA Pluronic 25R-1," "ADEKA Pluronic 25R-2," "ADEKA Pluronic 17R-2," and "ADEKA Pluronic 17R-3" each supplied by ADEKA CORPORATION; "Pluronic RPE Series" supplied by BASF Japan Ltd.; and "Poly(propylene glycol)-block-poly(ethylene glycol)-block-poly (propylene glycol)" supplied by SIGMA-ALDRICH Corporation.

Each of the compounds (D) may be used alone or in combination.

The compound(s) (D) is used in an amount (content in the pressure-sensitive adhesive composition) of preferably from 0.01 to 2.5 parts by weight, more preferably from 0.01 to 1.5 parts by weight, furthermore preferably from 0.02 to 1.0 part by weight, furthermore preferably from 0.02 to 0.5 part by weight, and most preferably from 0.02 to 0.3 part by weight, per 100 parts by weight of the acrylic emulsion polymer (A). The compound(s) (D), if in an amount of

less than 0.01 part by weight, may not exhibit sufficient defoaming activity (whereby poor appearance caused by bubble-derived defects may tend to occur). In contrast, compound(s) (D), if in an amount of more than 2.5 parts by weight, may tend to cause staining to the adherend.

The compound (D), when incorporated upon preparation of the pressure-sensitive adhesive composition, is preferably incorporated alone without the use of solvents. However, typically for higher workability in incorporation, the compound (D) may be used as a dispersion or solution in a solvent. Exemplary solvents herein include 2-ethylhexanol, butyl cellosolve, dipropylene glycol, ethylene glycol, propylene glycol, n-propyl alcohol, and isopropyl alcohol.

The presence of the compound (D) in the pressure-sensitive adhesive composition exhibits its defoaming activity to render the resulting pressure-sensitive adhesive sheet free from bubble-derived defects.

The compound (D) has a block type structure including the polyoxyethylene block in a center part of the molecule, and blocks composed of POs as hydrophobic groups at both ends of the molecule. The compound (D) is resistant to align uniformly at the vapor-liquid interface and particularly excels in defoaming activity. Other types of copolymers such as a PEG-PPG-PEG triblock copolymer having polyoxyethylene blocks at both ends of the molecule, a diblock copolymer of polyoxyethylene and polyoxypropylene, and a random copolymer of EO and PO are liable to align at the vapor-liquid interface and are thereby inferior in defoaming activity, as compared to the PPG-PEG-PPG triblock copolymer.

In addition, the compound (D) has high hydrophobicity, thereby less causes whitening staining of the adherend occurring in a high-humidity environment, and further less causes staining. A compound having high hydrophilicity (particularly a water-soluble compound) may often cause whitening staining in a high-humidity environment, because the compound is readily dissolved in water (moisture) to thereby be transferred to the adherend, or the compound tends to bleed out on the adherend and to swell, thus causing whitening.

By the use of the compound (D), a pressure-sensitive adhesive layer formed from the pressure-sensitive adhesive composition is resistant to whitening even during or after storage at high humidity (whitening due to moisture absorption). When a pressure-sensitive adhesive sheet is used as a surface-protecting film for an optical element, whitening of a pressure-sensitive adhesive layer (namely, whitening of the pressure-sensitive adhesive sheet), if occurring, may impede the inspection process of the optical element.

[Removable Water-Dispersible Acrylic Pressure-Sensitive Adhesive Composition and Pressure-Sensitive Adhesive Sheet]

The removable water-dispersible acrylic pressure-sensitive adhesive composition according to the present invention includes an acrylic emulsion polymer (A), a water-insoluble crosslinking agent (B), an acetylenic diol compound (C), and a compound (D) as essential components, as described above. The composition may further contain another crosslinking agent than the water-insoluble crosslinking agent (B) (hereinafter also referred to as "other crosslinking agent(s)"), and other additives according to necessity.

The pressure-sensitive adhesive composition according to the present invention is a water-dispersible, pressure-sensitive adhesive composition. As used herein the term "water-dispersible" refers to that the substance in question is capable of dispersing in an aqueous medium. Specifically, the pressure-sensitive adhesive composition is a pressure-sensitive adhesive composition capable of dispersing in an aqueous medium. The aqueous medium is a medium (dispersion medium) including water as an essential component and may be composed of water alone or a mixture of water and a water-soluble organic solvent (a water-miscible organic solvent). The pressure-sensitive adhesive composition of the present invention may also be, for example, in the form of a fluid dispersion using the aqueous medium.

The pressure-sensitive adhesive composition may further contain a crosslinking agent (other crosslinking agent) other than the water-insoluble crosslinking agent (B). The other crosslinking agent is not limited but is preferably a multifunctional hydrazide crosslinking agent. A multifunctional hydrazide crosslinking agent, when used, helps the pressure-sensitive adhesive composition to give a pressure-sensitive adhesive layer being improved in removability, adhesiveness, and anchoring capability with respect to the substrate. The multifunctional hydrazide crosslinking agent (hereinafter also simply referred to as "hydrazide crosslinking agent") is a compound having at least two hydrazide groups in the molecule (per molecule). The number of hydrazide groups per molecule is preferably 2 or 3, and more preferably 2. Exemplary compounds preferably used as the hydrazide crosslinking agent include, but are not limited to, dihydrazide compounds such as oxalic acid dihydrazide, malonic acid dihydrazide, succinic acid dihydrazide, glutaric acid dihydrazide, adipic acid dihydrazide, pimelic acid dihydrazide, suberic acid dihydrazide, azelaic acid dihydrazide, sebacic acid dihydrazide, dodecanedioic acid dihydrazide, phthalic acid dihydrazide, isophthalic acid dihydrazide, terephthalic acid dihydrazide, 2,6-naphthalenedicarboxylic acid dihydrazide, naphthalic acid dihydrazide, acetonedicarboxylic acid dihydrazide, fumaric acid dihydrazide, maleic acid dihydrazide, itaconic acid dihydrazide, trimellitic acid dihydrazide, 1,3,5-benzenetricarboxylic acid dihydrazide, pyromellitic acid dihydrazide, and aconitic acid dihydrazide. Among them, adipic acid dihydrazide and sebacic acid dihydrazide are particularly preferred. Each of different hydrazide crosslinking agents may be used alone or in combination.

The hydrazide crosslinking agent may be a commercial product such as trade name "Adipic Acid Dihydrazide

(Reagent)" supplied by Tokyo Chemical Industry Co., Ltd. and trade name "Adipoyl Dihydrazide (Reagent)" supplied by Wako Pure Chemical Industries, Ltd.

The amount (content in the pressure-sensitive adhesive composition) of the hydrazide crosslinking agent(s) is preferably from 0.025 to 2.5 moles, more preferably from 0.1 to 2 moles, and furthermore preferably from 0.2 to 1.5 moles, per 1 mole of keto groups of the keto-containing unsaturated monomer used as a constitutive monomer for the acrylic emulsion polymer (A). The hydrazide crosslinking agent, if in an amount of less than 0.025 mole, may not exhibit sufficient effects of its addition, and this may cause the pressure-sensitive adhesive layer or pressure-sensitive adhesive sheet to be peeled off heavily (with less removability) and may tend to cause whitening staining of the adherend due to low-molecular-weight components remained in the polymer constituting the pressure-sensitive adhesive layer. In contrast, the hydrazide crosslinking agent, if in an amount of more than 2.5 moles, may cause staining due to unreacted crosslinking agent component.

From the viewpoint of less staining, the pressure-sensitive adhesive composition is preferably not incorporated with any quaternary ammonium salt, and more preferably not incorporated with any quaternary ammonium compound. Accordingly, the pressure-sensitive adhesive composition preferably contains substantially no quaternary ammonium salt, and more preferably contains substantially no quaternary ammonium compound. These compounds are generally used typically as catalysts for improving reactivity of epoxy crosslinking agents. These compounds, however, are not integrated into the polymer constituting the pressure-sensitive adhesive layer, are capable of migrating freely in the pressure-sensitive adhesive layer, and are tend to precipitate to the adherend surface. For these reasons, the compounds, if contained in the pressure-sensitive adhesive composition, may often cause whitening staining and may thereby impede development of less-staining properties. Specifically, the pressure-sensitive adhesive composition has a quaternary ammonium salt content of preferably less than 0.1 percent by weight, more preferably less than 0.01 percent by weight, and furthermore preferably less than 0.005 percent by weight, based on the total weight (100 percent by weight) of non-volatile components in the pressure-sensitive adhesive composition. The pressure-sensitive adhesive composition more preferably has a quaternary ammonium compound content falling within the above-specified range.

Specifically, exemplary quaternary ammonium salts include, but are not limited to, compounds each represented by the following formula:

[Chem. 3]

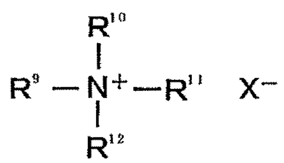

In the formula, $R^9$, $R^{10}$, $R^{11}$, and $R^{12}$ each independently represent not hydrogen atom but an alkyl group, an aryl group, or a group derived from them (e.g., a substituted alkyl group or aryl group); and $X^-$ represents a counter ion.

Examples of the quaternary ammonium salt and quaternary ammonium compound include, but are not limited to, alkylammonium hydroxides such as tetramethylammonium hydroxide (TMAH), tetraethylammonium hydroxide, tetrapropylammonium hydroxide, tetrabutylammonium hydroxide, and salts of them; arylammonium hydroxides such as tetraphenylammonium hydroxide, and salts of them; and bases and salts of them, which bases including, as a cation, any of trilaurylmethylammonium ion, didecyldimethylammonium ion, dicocoyldimethylammonium ion, distearyldimethylammonium ion, dioleyldimethylammonium ion, cetyltrimethylammonium ion, stearyltrimethylammonium ion, behenyltrimethylammonium ion, cocoylbis(2-hydroxyethyl)methylammonium ion, polyoxyethylene(15) coco-stearylmethylammonium ion, oleylbis(2-hydroxyethyl)methylammonium ion, coco-benzyldimethylammonium ion, laurylbis(2-hydroxyethyl)methylammonium ion, and decylbis(2-hydroxyethyl)methylammonium ion.

Also from the viewpoint of less staining, the pressure-sensitive adhesive composition is preferably not incorporated with tertiary amines and imidazole compounds. Such tertiary amines and imidazole compounds are generally used typically as catalysts for improving reactivity of epoxy crosslinking agents, as with the quaternary ammonium salts (or quaternary ammonium compounds). Accordingly, the pressure-sensitive adhesive composition preferably contains substantially no tertiary amine and substantially no imidazole compound. Specifically, the pressure-sensitive adhesive composition has a content of tertiary amines and imidazole compounds (total content of tertiary amines and imidazole compounds) of preferably less than 0.1 percent by weight, more preferably less than 0.01 percent by weight, and furthermore preferably less than 0.005 percent by weight, based on the total weight (100 percent by weight) of non-volatile components in the pressure-sensitive adhesive composition.

Exemplary tertiary amines include tertiary amine compounds such as triethylamine, benzyldimethylamine, and

α-methylbenzyl-dimethylamine. Exemplary imidazole compounds include 2-methylimidazole, 2-heptadecylimidazole, 2-phenylimidazole, 4-ethylimidazole, 4-dodecylimidazole, 2-phenyl-4-hydroxymethylimidazole, 2-ethyl-4-hydroxymethylimidazole, 1-cyanoethyl-4-methylimidazole, and 2-phenyl-4,5-dihydroxymethylimidazole.

In addition, the pressure-sensitive adhesive composition preferably contains substantially no hydrophobic silica. Specifically, the pressure-sensitive adhesive composition has a hydrophobic silica content of preferably less than $5\times 10^{-4}$ percent by weight, more preferably less than $1\times 10^{-4}$ percent by weight, furthermore preferably less than $1\times 10^{-5}$ percent by weight, and most preferably 0 percent by weight, based on the total weight (100 percent by weight) of non-volatile components in the pressure-sensitive adhesive composition. Hydrophobic silica, if contained in the pressure-sensitive adhesive composition, may form secondary aggregates, and the resulting silica particles (aggregates) may cause a defect (appearance defect). Upon filtration of the pressure-sensitive adhesive composition typically through a filter, the filter may be clogged with the silica particles, resulting in insufficient production efficiency.

The pressure-sensitive adhesive composition may further contain various additives within a range not adversely affecting less-staining properties, in addition to the above components. Exemplary additives include pigments, fillers, dispersing agents, plasticizers, stabilizers, antioxidants, ultraviolet absorbers, ultraviolet stabilizers, age inhibitors, and antiseptic agents.

The pressure-sensitive adhesive composition may be prepared by mixing the acrylic emulsion polymer (A), the water-insoluble crosslinking agent (B), the acetylenic diol compound (C), and the compound (D). Where necessary, other crosslinking agent(s), and other additives may be mixed. The mixing may be performed according to any known or customary technique for mixing an emulsion, but is preferably performed, for example, by stirring with a stirrer. Though stirring conditions are not limited, the stirring is performed, for example, at a temperature of preferably from 10°C to 50°C, and more preferably from 20°C to 35°C for a duration (stirring time) of preferably from 5 to 30 minutes, and more preferably from 10 to 20 minutes at a number of revolutions in stirring of preferably from 10 to 2000 rpm, and more preferably from 30 to 1000 rpm.

The pressure-sensitive adhesive composition thus obtained is applied to at least one side of a substrate (also referred to as a "base material" or "supporting substrate"), dried according to necessity to form a pressure-sensitive adhesive layer, and thereby yields a pressure-sensitive adhesive sheet according to the present invention (hereinafter simply referred to as "pressure-sensitive adhesive sheet"). This is a pressure-sensitive adhesive sheet including a substrate and, on at least one side thereof, a pressure-sensitive adhesive layer formed from the pressure-sensitive adhesive composition according to the present invention. Crosslinking is performed typically by heating the pressure-sensitive adhesive sheet after dehydration and drying in the drying step. The pressure-sensitive adhesive layer herein is preferably provided by a so-called direct application technique in which the pressure-sensitive adhesive composition is directly applied to the substrate surface, as described above. The direct application technique is preferred because the pressure-sensitive adhesive layer herein has a high solvent-insoluble content and, if formed by a transfer process, where a pressure-sensitive adhesive layer is once provided on a release film and then transferred onto the substrate, may not exhibit sufficient anchoring capability (adhesion) to the substrate. It should be noted, however, that the pressure-sensitive adhesive sheet according to the present invention has only to be a pressure-sensitive adhesive sheet having a substrate and, on at least one side thereof, a pressure-sensitive adhesive layer formed from the pressure-sensitive adhesive composition, and its production method is not limited.

The pressure-sensitive adhesive layer (after crosslinking) in the pressure-sensitive adhesive sheet has a thickness of preferably from 1 to 50 μm, more preferably from 1 to 35 μm, and furthermore preferably from 3 to 25 μm.

The pressure-sensitive adhesive layer (after crosslinking) in the pressure-sensitive adhesive sheet has a solvent-insoluble content (gel fraction) of preferably 90% (percent by weight) or more, and more preferably 95 percent by weight or more. The pressure-sensitive adhesive layer, if having a solvent-insoluble content of less than 90 percent by weight, may cause increased transfer of contaminants to the adherend to cause whitening staining or may have insufficient removability to cause heavy peeling off (insufficient removability).

The solvent-insoluble content of the pressure-sensitive adhesive layer (after crosslinking) may be measured by the procedure as with the method for measuring the solvent-insoluble content of the acrylic emulsion polymer (A). Specifically, the solvent-insoluble content herein may be measured by the procedure corresponding to the "method for measuring solvent-insoluble content" except that the term "acrylic emulsion polymer (A)" is read as "pressure-sensitive adhesive layer (after crosslinking)."

The pressure-sensitive adhesive layer (after crosslinking) in the pressure-sensitive adhesive sheet has an elongation at break (elongation at rupture) in a tensile test (at 23°C and 50% relative humidity) of preferably 200% or less, more preferably 150% or less, furthermore preferably 130% or less, still more preferably from 40% to 120%, and most preferably from 60% to 115%, from the viewpoint of degree of crosslinking of the pressure-sensitive adhesive layer. The elongation at break is an index of the degree of crosslinking of the pressure-sensitive adhesive layer and, if being 200% or less, the polymer constituting the pressure-sensitive adhesive layer may have a dense crosslinking structure. This enables the prevention of spread by wetting of the pressure-sensitive adhesive layer after its formation. In addition, such dense crosslinking structure constrains the polymer constituting the pressure-sensitive adhesive layer and thereby

prevents increase in adhesive strength to the adherend with time due to segregation of the functional groups (carboxyl groups) in the pressure-sensitive adhesive layer to the surface in contact with the adherend.

The acrylic polymer (after crosslinking) constituting the pressure-sensitive adhesive layer in the pressure-sensitive adhesive sheet has a glass transition temperature of preferably from -70°C to -10°C, more preferably from -70°C to -20°C, furthermore preferably from -70°C to -40°C, and most preferably from -70°C to -60°C. The acrylic polymer, if having a glass transition temperature of higher than -10°C, may cause insufficient adhesive strength and may thereby cause gap and/or separation typically upon working. The acrylic polymer, if having a glass transition temperature of lower than -70°C, may cause heavy peeling when peeled off at higher peel rates (at higher tensile speeds) and may thereby cause insufficient working efficiency. The glass transition temperature of the acrylic polymer (after crosslinking) constituting the pressure-sensitive adhesive layer may also be regulated typically by the monomer composition upon preparation of the acrylic emulsion polymer (A).

The substrate for use in the pressure-sensitive adhesive sheet is preferably a plastic substrate (e.g., a plastic film or plastic sheet) for allowing the pressure-sensitive adhesive sheet to have high transparency. Exemplary materials for plastic substrates include, but are not limited to, transparent resins including polyolefins (polyolefin resins) such as polypropylenes and polyethylenes; polyesters (polyester resins) such as poly(ethylene terephthalate)s (PETs); polycarbonates; polyamides; polyimides; acrylic resins; polystyrenes; acetate resins; poly(ether sulfone)s; and triacetylcellulose. Each of different resins may be used alone or in combination. Though not limited, polyester resins and polyolefin resins are preferred among these resins, of which PETs, polypropylenes, and polyethylenes are more preferred from the viewpoints of productivity and formability (moldability). Specifically, as the substrate, polyester films and polyolefin films are preferred, of which PET films, polypropylene films, and polyethylene films are more preferred. Though not limited, examples of the polypropylenes include homopolypropylenes as homopolymers; random polypropylenes as $\alpha$-olefin random copolymers; and block polypropylenes as $\alpha$-olefin block copolymers. Exemplary polyethylenes include low-density polyethylenes (LDPEs), high-density polyethylenes (HDPEs), and linear low-density polyethylenes (L-LDPEs). Each of these may be used alone or in combination. Though not critical, the substrate has a thickness of preferably from 10 to 150 $\mu$m, and more preferably from 30 to 100 $\mu$m.

The surface of the substrate where the pressure-sensitive adhesive layer is to be provided preferably has undergone an adhesion-promoting treatment such as acid treatment, base treatment, primer treatment, corona treatment, plasma treatment, or ultraviolet ray treatment typically for improving the adhesion to the pressure-sensitive adhesive layer. The pressure-sensitive adhesive sheet may further include an intermediate layer between the substrate and the pressure-sensitive adhesive layer. The intermediate layer has a thickness of preferably from 0.05 to 1 $\mu$m, and more preferably from 0.1 to 1 $\mu$m.

The pressure-sensitive adhesive sheet has an adhesive strength of preferably from 0.01 to 5 N/25 mm, more preferably from 0.02 to 3 N/25 mm, furthermore preferably from 0.03 to 2 N/25 mm, and most preferably from 0.04 to 1 N/25 mm at a tensile speed of 0.3 m/min with respect to a polarizing plate (triacetylcellulose (TAC) plate) (one having an arithmetic mean surface roughness Ra of 50 nm or less). The adhesive strength is the peel strength measured in a 180-degree peel test upon peeling of the pressure-sensitive adhesive sheet which has been affixed to the polarizing plate. The pressure-sensitive adhesive sheet, if having an adhesive strength of more than 5 N/25 mm, may become resistant to peeling off (may have insufficient removability) upon production process typically of a polarizing plate or a liquid crystal display device and may thereby cause insufficient productivity and handleability. The pressure-sensitive adhesive sheet, if having an adhesive strength of less than 0.01 N/25 mm, may suffer from gap or separation during the production process and may not satisfactorily serve to protect the product as a surface-protecting pressure-sensitive adhesive sheet. The arithmetic mean surface roughness Ra may be measured typically by using the stylus-type surface profilometer "P-15" supplied by KLA-Tencor Corporation. Though measurement conditions are not limited, the surface roughness (arithmetic mean surface roughness Ra) may be measured in one scanning pass at a measurement length of 1000 $\mu$m and a scanning speed of 50 $\mu$m/second under a load of 2 mg.

The pressure-sensitive adhesive sheet satisfactorily less causes whitening staining of the adherend. This may be evaluated, for example, in the following manner. The pressure-sensitive adhesive sheet is affixed to a polarizing plate (trade name "SEG1425DUHC," supplied by Nitto Denko Corporation) at 0.25 MPa and 0.3 m/min, left stand at 80°C for 4 hours, and then removed from the polarizing plate. The polarizing plate after the removal of the pressure-sensitive adhesive sheet is further left stand in an ambient temperature of 23°C and relative humidity of 90% for 12 hours, and the surface thereof is observed. In this observation, it is preferred that no whitening is observed in the polarizing plate surface. The pressure-sensitive adhesive sheet, if causing whitening of the adherend polarizing plate under humid conditions (high-humidity conditions) after affixation and removal of the pressure-sensitive adhesive sheet, has insufficient less-staining properties to be used as a surface-protecting film for optical elements.

The pressure-sensitive adhesive sheet may be formed into a roll. In this case, the sheet may be wound as a roll while the pressure-sensitive adhesive layer is protected with a release film (separator). The pressure-sensitive adhesive sheet may have, on its backside (side opposite to the pressure-sensitive adhesive layer), a backing layer (e.g., release layer or antifouling layer) through a release treatment and/or an antifouling treatment typically with a release

agent such as a silicone, fluorine-containing, long-chain alkyl, or fatty acid amide release agent, or a silica powder. The pressure-sensitive adhesive sheet particularly preferably has a structure of [(pressure-sensitive adhesive layer)/(substrate)/(backing layer)].

The pressure-sensitive adhesive sheet more preferably has undergone an antistatic treatment. The antistatic treatment may be performed by a regular antistatic treatment process, is not limited, but may be performed typically by a process of providing an antistatic layer on the backside (side opposite to the pressure-sensitive adhesive layer) of the substrate or a process of incorporating a kneading-type antistatic agent (electrification preventing agent) into the substrate.

The antistatic layer may be provided typically by applying an antistatic resin containing an antistatic agent alone or in combination with a resin component, an electroconductive resin composition containing an electroconductive material and a resin component, or an electroconductive polymer; or by performing vapor deposition or plating of an electroconductive material.

Examples of the antistatic agent include cationic antistatic agents each having a cationic functional group (e.g., primary amino group, secondary amino group, or tertiary amino group), such as quaternary ammonium salts and pyridinium salts; anionic antistatic agents each having an anionic functional group, such as sulfonic acid salts, sulfuric ester salts, phosphonic acid salts, and phosphoric ester salts; amphionic antistatic agents such as alkylbetaines and derivatives thereof, imidazoline and derivatives thereof, and alanine and derivatives thereof; nonionic antistatic agents such as amino-alcohols and derivatives thereof, glycerol and derivatives thereof, and polyethylene glycols and derivatives thereof; as well as ionically conductive polymers obtained by polymerization or copolymerization of a monomer or monomers each having an ionically conductive group, as typified by the cationic antistatic agents, anionic antistatic agents, and amphionic antistatic agents.

Specifically, examples of the cationic antistatic agents include alkyltrimethylammonium salts; acylamidopropyltrimethylammonium methosulfates; alkylbenzylmethylammonium salts; acylcholine chlorides; (meth)acrylate copolymers each having a quaternary ammonium group, such as poly(dimethylaminoethyl methacrylate)s; styrenic copolymers each having a quaternary ammonium group, such as poly(vinylbenzyltrimethylammonium chloride)s; and diallylamine copolymers each having a quaternary ammonium group, such as poly(diallyldimethylammonium chloride)s. Examples of the anionic antistatic agents include alkylsulfonic acid salts, alkylbenzenesulfonic acid salts, alkylsulfuric ester salts, alkylethoxysulfuric ester salts, alkylphosphoric ester salts, and sulfo-containing styrenic copolymers. Examples of the amphionic antistatic agents include alkylbetaines, alkylimidazolium betaines, and carbobetaine graft copolymers. The nonionic antistatic agents include, for example, fatty acid alkylolamides, di-(2-hydroxyethyl)alkylamines, polyoxyethylene alkylamines, fatty acid glycerol esters, polyoxyethylene glycol fatty acid esters, sorbitan fatty acid esters, polyoxysorbitan fatty acid esters, polyoxyethylene alkyl phenyl ethers, polyoxyethylene alkyl ethers, polyethylene glycols, polyoxyethylenediamines, copolymers each composed of a polyether, a polyester, and a polyamide, and methoxypolyethylene glycol (meth)acrylates.

Examples of the electroconductive polymers include polyanilines, polypyrroles, and polythiophenes.

Exemplary electroconductive materials include tin oxide, antimony oxide, indium oxide, cadmium oxide, titanium oxide, zinc oxide, indium, tin, antimony, gold, silver, copper, aluminum, nickel, chromium, titanium, iron, cobalt, copper iodide, and alloys or mixtures of them.

Examples of the resin component for use herein include general-purpose resins such as polyesters, acrylic resins, vinyl polymers, urethane resins, melamine resins, and epoxy resins. When the antistatic agent is a polymeric antistatic agent, the antistatic resin does not have to contain the resin component. The antistatic resin may further contain, as a crosslinking agent, a compound such as methylolated or alkylolated melamine, urea, glyoxal, or acrylamide compound, as well as an epoxy compound or an isocyanate compound.

The antistatic layer, when formed by coating, may be formed typically by diluting the antistatic resin, electroconductive polymer, or electroconductive resin composition with a solvent or dispersion medium such as an organic solvent or water to form a coating composition, and applying the coating composition to the substrate, followed by drying. Exemplary organic solvents include methyl ethyl ketone, acetone, ethyl acetate, tetrahydrofuran, dioxane, cyclohexanone, n-hexane, toluene, xylenes, methanol, ethanol, n-propyl alcohol, and isopropyl alcohol. Each of these may be used alone or in combination. The coating may be performed according to a known coating procedure such as roll coating, gravure coating, reverse coating, roll brush coating, spray coating, air knife coating, impregnation, or curtain coating.

The antistatic layer (antistatic resin layer, electroconductive polymer layer, or electroconductive resin composition layer) formed by coating has a thickness of preferably from 0.001 to 5 $\mu$m, and more preferably from 0.005 to 1 $\mu$m.

Exemplary procedures for the vapor deposition or plating of the electroconductive material include vacuum deposition, sputtering, ion plating, chemical vapor deposition, spray pyrolysis, chemical plating, and electroplating.

The antistatic layer (electroconductive material layer) formed by vapor deposition or plating has a thickness of preferably from 20 to 10000 angstroms, and more preferably from 50 to 5000 angstroms.

Any of the aforementioned antistatic agents may be suitably used as the kneading-type antistatic agent. The

kneading-type antistatic agent is incorporated in an amount of preferably 20 percent by weight or less, and more preferably from 0.05 to 10 percent by weight, based on the total weight (100 percent by weight) of the substrate. The way to incorporate is not limited, as long as the kneading-type antistatic agent can be uniformly mixed with, for example, a resin for use in a plastic substrate, and examples thereof generally include a process typically using a heating roll, Banbury mixer, press kneader, or double-screw kneader.

The pressure-sensitive adhesive composition according to the present invention is a pressure-sensitive adhesive composition capable of forming a removable, pressure-sensitive adhesive layer excellent in adhesiveness and removability (easy-peelability) and is used for the formation of a removable pressure-sensitive adhesive layer that is used in an application where the pressure-sensitive adhesive layer will be removed. Specifically, the pressure-sensitive adhesive sheet having a pressure-sensitive adhesive layer formed from the pressure-sensitive adhesive composition is used in applications where the sheet will be removed. Exemplary applications include masking tapes such as masking tapes for protection or curing in construction, masking tapes for automobile painting, masking tapes for electronic components (e.g., lead frames and printed circuit boards), and masking tapes for sand blasting; surface-protecting films such as surface-protecting films for aluminum sash, surface-protecting films for optical plastics, surface-protecting films for optical glass, surface-protecting films for the protection of automobiles, and surface-protecting films for metal plates; pressure-sensitive adhesive tapes for production processes of semiconductor/electronic components, such as backgrinding tapes, pellicle-fixing tapes, dicing tapes, lead-frame-fixing tapes, cleaning tapes, dedusting tapes, carrier tapes, and cover tapes; packaging tapes for electronic appliances and electronic components; temporal tacking tapes upon transportation; binding tapes; and labels.

In addition, the pressure-sensitive adhesive sheet according to the present invention less suffers from appearance defects such as "dimples" of the pressure-sensitive adhesive layer and has a good appearance. The pressure-sensitive adhesive sheet, when used as being affixed to an adherend, does not cause staining, such as whitening staining, of the adherend and has excellent less-staining properties. For these reasons, the pressure-sensitive adhesive sheet is preferably used particularly for protecting the surface of optical elements (e.g., optical plastics, optical glass, and optical films) typically as a surface-protecting film for an optical element, in which satisfactory appearance characteristics and less-staining properties are required. Exemplary optical elements include polarizing plates, retardation films, anti-reflective films, wave plates, compensation films, and brightness enhancing films for constituting panels typically of liquid crystal displays, organic electroluminescence (organic EL) displays, and field emission displays. However, the pressure-sensitive adhesive sheet can also be used for other applications not limited to the above ones and can be used typically for surface-protection, failure-prevention, removal typically of foreign matter, or masking upon production of microfabricated components typically of semiconductors (semiconductor devices), circuits, printed circuit boards, masks, and lead frames.

## Examples

The present invention will be illustrated in further detail with reference to several working examples below. It should be noted, however, that these examples are never construed to limit the scope of the present invention. All parts and percentages below are by weight, unless otherwise specified.

### Example 1

Preparation of Acrylic Emulsion Polymer (A)

A monomer emulsion was prepared by placing in a vessel 90 parts by weight of water, 96 parts by weight of 2-ethylhexyl acrylate (2EHA), 4 parts by weight of acrylic acid (AA), and 3 parts by weight of a nonionic-anionic reactive emulsifier (trade name "ADEKA REASOAP SE-10N" supplied by ADEKA CORPORATION) as shown in Table 1, and mixing them with stirring using a homomixer.
Next, 50 parts by weight of water, 0.01 part by weight of a polymerization initiator (ammonium persulfate), and the above-prepared monomer emulsion in an amount corresponding to 10 percent by weight thereof were placed in a reactor equipped with a condenser, a nitrogen inlet tube, a thermometer, and a stirrer, and these were subjected to emulsion polymerization with stirring at 75°C for 1 hour. Thereafter 0.05 part by weight of the polymerization initiator (ammonium persulfate) was further added, and all the residual monomer emulsion (in an amount corresponding to 90 percent by weight) was added thereto with stirring over 3 hours, followed by a reaction at 75°C for 3 hours. This was cooled to 30°C, combined with a 10 percent by weight ammonia water to be adjusted to pH 8, and thereby yielded a water dispersion of acrylic emulsion polymer.

Preparation of Removable Water-Dispersible Acrylic Pressure-Sensitive Adhesive Composition

A removable water-dispersible acrylic pressure-sensitive adhesive composition was prepared by adding 3 parts by weight of an epoxy crosslinking agent [trade name "TETRAD -C" supplied by Mitsubishi Gas Chemical Company, Inc., 1,3-bis(N,N- diglycidylaminomethyl)cyclohexane, having an epoxy equivalent of 110 and a number of functional groups of 4] as the water-insoluble crosslinking agent (B), 1 part by weight of a composition of acetylenic diol compound having a HLB value of 4 [trade name "Surfynol 104H" supplied by Air Products and Chemicals Inc., having an active component content of 75 percent by weight] (0.75 part by weight in terms of acetylenic diol compound) as the acetylenic diol compound (C), and 1 part by weight of the trade name "ADEKA Pluronic 25R-1" [supplied by ADEKA CORPORATION] as the compound (D) to the above-prepared water dispersion of acrylic emulsion polymer, followed by stirring and blending with a stirrer at 23°C, 300 rpm for 10 minutes. The amounts of the respective components are indicated per 100 parts by weight (solids content) of the acrylic emulsion polymer.

Formation of Pressure-Sensitive Adhesive Layer and Production of Pressure-Sensitive Adhesive Sheet

Next, the above-prepared removable water-dispersible acrylic pressure-sensitive adhesive composition was applied to a corona-treated surface of a PET film (Mitsubishi Plastics, Inc. under the trade name "T100C38," having a thickness of 38 μm) so as to have a dry thickness of 15 μm, using an applicator supplied by Tester Sangyo Co., Ltd. The article was dried in an oven with internal air circulation at 120°C for 2 minutes, affixed to a silicone-treated surface of a PET film ("MRF38" supplied by Mitsubishi Plastics, Inc.) (the surface of which had been treated with a silicone), aged at 50°C for 3 days, and thereby yielded a pressure-sensitive adhesive sheet.

Examples 2, 3, and 5 to 8 and Comparative Examples 1 to 6

A series of removable water-dispersible acrylic pressure-sensitive adhesive compositions and a series of pressure-sensitive adhesive sheets were prepared by the procedure of Example 1, except for using components in formulations given in Table 1.

Example 4

A monomer emulsion was prepared by the procedure of Example 1, except for using constitutive monomers of other types in other amounts as given in Table 1.
Except for using the above-prepared monomer emulsion, a removable water-dispersible acrylic pressure-sensitive adhesive composition and a pressure-sensitive adhesive sheet were obtained by the procedure of Example 1.

Evaluation

Evaluations were performed on the pressure-sensitive adhesive sheets and removable water-dispersible acrylic pressure-sensitive adhesive compositions prepared in the examples and comparative examples by measuring methods or evaluation methods as mentioned below. The solvent-insoluble content of the pressure-sensitive adhesive layer (after crosslinking) was measured by the aforementioned measuring method.
The results are indicated in Table 1.

(1) Less-Staining Properties (Suppression of Whitening Staining) [High-Humidity Test]

Each of the pressure-sensitive adhesive sheets prepared in the examples and comparative examples (sample size: 25 mm in width and 100 mm in length) was affixed to a polarizing plate (trade name "SEG1425DUHC supplied by Nitto Denko Corporation," 70 mm in width and 120 mm in length) at a pressure (load) of 0.25 MPa and at a rate of 0.3 m/min using a laminator (small-sized laminator, supplied by Tester Sangyo Co., Ltd.).
The polarizing plate affixed to the pressure-sensitive adhesive sheet was as intact left stand at 80°C for 4 hours, and then the pressure-sensitive adhesive sheet was removed therefrom. The polarizing plate, from which the pressure-sensitive adhesive sheet had been removed, was left stand in a high-humidity environment (at a temperature of 23°C and relative humidity of 90%) for 12 hours, the surface of which was visually observed, and less-staining properties were evaluated according to the following criteria:
Satisfactorily less staining (Good): No change was observed both in a portion where the pressure-sensitive adhesive sheet had been affixed and in a portion where the pressure-sensitive adhesive sheet had not been affixed;
Staining (Poor): Whitening was observed in a portion where the pressure-sensitive adhesive sheet had been affixed.

(2) Resistance to increase in adhesive strength Initial Adhesive Strength

Each of the pressure-sensitive adhesive sheets prepared in the examples and comparative examples (sample size: 25 mm in width and 100 mm in length) was affixed to a polarizing plate at a pressure (load) of 0.25 MPa and at a rate of 0.3 m/min using a laminator (small-sized laminator, supplied by Tester Sangyo Co., Ltd.). The polarizing plate was made from a material triacetylcellulose (TAC) and had an arithmetic mean surface roughness Ra of about 21 nm in the machine direction (MD), about 31 nm in the transverse direction (TD), and about 26 nm on an average of the machine direction and the transverse direction.
The laminated sample of the pressure-sensitive adhesive sheet and the polarizing plate was left stand at an ambient temperature of 23°C and relative humidity of 50% for 20 minutes, subjected to a 180-degree peel test under conditions mentioned below, an adhesive strength (N/25 mm) of the pressure-sensitive adhesive sheet to the polarizing plate was measured, and this was defined as "initial adhesive strength."

Adhesive Strength After Affixation/Storage at 40°C for One Week

Each of the pressure-sensitive adhesive sheets prepared in the examples and comparative examples (sample size: 25 mm in width and 100 mm in length) was affixed to a polarizing plate at a pressure (load) of 0.25 MPa and at a rate of 0.3 m/min using a laminator (small-sized laminator, supplied by Tester Sangyo Co., Ltd.). The polarizing plate was made from a material triacetylcellulose (TAC) and had an arithmetic mean surface roughness Ra of about 21 nm in the machine direction (MD), about 31 nm in the transverse direction (TD), and about 26 nm on an average of the machine direction and the transverse direction.
The laminated sample of the pressure-sensitive adhesive sheet and the polarizing plate was stored at an ambient temperature of 40°C for one week, left stand at an ambient temperature of 23°C and relative humidity of 50% for 2 hours, subjected to a 180-degree peel test under conditions mentioned below, an adhesive strength (N/25 mm) of the pressure-sensitive adhesive sheet to the polarizing plate was measured, and this was defined as "adhesive strength after affixation/storage at 40°C for one week."
The 180-degree peel test was performed at an ambient temperature of 23°C and relative humidity of 50% and at a tensile speed of 0.3 m/min using a tensile tester.
A sample can be evaluated as excelling in resistance to increase in adhesive strength when having a difference between the initial adhesive strength and the adhesive strength after affixation/storage at 40°C for one week [(adhesive strength after affixation/storage at 40°C for one week)-(initial adhesive strength)] of 0.10 N/25 mm or less.

(3) Appearance (Presence or Absence of Dimples and Bubbles)

The surface of the pressure-sensitive adhesive layer of each of the pressure-sensitive adhesive sheets prepared in the examples and comparative examples was visually observed. The number of defects (dimples and bubbles) in an observation area of 10 cm wide and 10 cm long was counted, and the appearance was evaluated according to the following criteria:
Good appearance (Good): The number of defects was from 0 to 100;
Poor appearance (Poor): The number of defects was 101 or more.

(4) Elongation at Break (Elongation at Rupture) of Pressure-Sensitive Adhesive Layer (After Crosslinking)

[Tensile Test]

Each of the removable water-dispersible acrylic pressure-sensitive adhesive compositions prepared in the examples and comparative examples was applied to a surface, which had been treated with a silicone, of a PET film (Mitsubishi Plastics, Inc. under the trade name "MRF38") (the surface of which had been treated with a silicone) so as to have a dry thickness of 50 μm, dried in an oven with internal air circulation at 120°C for 2 minutes, aged at 50°C for 3 days, and thereby yielded a pressure-sensitive adhesive layer.
Next, the pressure-sensitive adhesive layer was rounded and yielded a cylindrical pressure-sensitive adhesive layer sample (50 mm in length and 1 $mm^2$ in sectional area (base area)).
The elongation at rupture (elongation at break) was measured by performing a tensile test at 23°C and 50% relative humidity at a tensile speed of 50 mm/min using a tensile tester, while setting chucks so as to give an initial measurement length (chuck-to-chuck distance) of 10 mm.
The elongation at rupture (elongation at break) indicates an elongation at the time when the specimen (pressure-sensitive adhesive layer sample) breaks, and is calculated according to the following equation:

"Elongation at rupture (elongation at break)" (%) = ("Length of specimen at rupture (chuck-to-chuck distance at rupture)"-"Initial length (10 mm)")/"Initial length (10 mm)" × 100

(5) Whitening of Pressure-Sensitive Adhesive Sheet upon Storage at High Humidity

Each of the pressure-sensitive adhesive sheets prepared in the examples and comparative examples was left stand in an environment at a temperature of 50°C and relative humidity of 95% for 24 hours (as high-humidity storage) and was subjected to measurement of haze (haze after high-humidity storage) with "DIGITAL HAZEMETER NDH-20D" supplied by Nippon Denshoku Industries Co., Ltd. The measurement was performed within 3 minutes after the sample was retrieved from the environment at a temperature of 50°C and relative humidity of 95%. As a comparison, the haze of the sample before high-humidity storage was also measured as "haze before high-humidity storage."
TABLE 1

| | | | Ex. 1 | Ex. 2 | Ex. 3 | Ex. 4 | Ex. 5 | Ex. 6 | Ex. 7 | Ex. 8 | Com. Ex. 1 | Com. Ex. 2 | Com. Ex. 3 | Com. Ex. 4 | Com. Ex. 5 | Com. Ex. 6 |
|---|---|---|---|---|---|---|---|---|---|---|---|---|---|---|---|---|
| Acrylic emulsion polymer(A) | Constitutive monomer (part by weight) | 2EHA | 96 | 96 | 96 | 92 | 96 | 96 | 96 | 96 | 96 | 96 | 96 | 96 | 96 | 96 |
| | | AA | 4 | 4 | 4 | 4 | 4 | 4 | 4 | 4 | 4 | 4 | 4 | 4 | 4 | 4 |
| | | MMA | - | - | - | - | - | - | - | 4 | - | - | - | - | - | - |
| | Emulsifier (part by weight) | SE-10N | 3 | 3 | 3 | 3 | 3 | 3 | 3 | 3 | 3 | 3 | 3 | 3 | 3 | 3 |
| | Acrylic emulsion polymer(A) (part by weight) | | 100 | 100 | 100 | 100 | 100 | 100 | 100 | 100 | 100 | 100 | 100 | 100 | 100 | 100 |
| | crosslinking agent (B) (part by weight) | TETRAD-C | 3 | 3 | 3 | 3 | 3 | 3 | 3 | 3 | 3 | 3 | 3 | 3 | 3 | - |
| | Acetylenic diol compound (C) with HLB of less than 13 (part by weight) | Surfynol 104H (HLB=4) | 1 | 1 | 1 | 1 | - | - | - | 1 | 1 | 1 | - | 1 | 1 | 1 |
| | | Surfynol 104PG-50 | - | - | - | - | 1 | - | - | - | - | - | - | | - | - |
| | | Surfynol 420 (HLB=4) | - | - | - | - | - | 1 | - | - | - | - | - | - | - | - |
| | | Surfynol 440 (HLB=8) | - | - | - | - | - | - | 1 | - | - | - | - | - | - | - |

(continued)

| | | | Ex. 1 | Ex. 2 | Ex. 3 | Ex. 4 | Ex. 5 | Ex. 6 | Ex. 7 | Ex. 8 | Com. Ex. 1 | Com. Ex. 2 | Com. Ex. 3 | Com. Ex. 4 | Com. Ex. 5 | Com. Ex. 6 |
|---|---|---|---|---|---|---|---|---|---|---|---|---|---|---|---|---|
| Removable water-dispersible acrylic pressure-sensitive adhesive composition | Compound (D) (part by weight) | ADEKA Pluronic 25R-1 | 1 | - | - | 1 | 1 | 1 | 1 | 0.1 | - | - | - | - | - | - |
| | | ADEKA Pluronic 17R-3 | - | 0.5 | - | - | - | - | - | - | - | - | - | - | - | - |
| | | PPO-PEO-PPO | - | - | 0.5 | - | - | - | - | - | - | - | - | - | - | - |
| | Acetylenic diol compound with HLB of 13 or more (part by weight) | Surfynol 465 (HLB=13) | - | - | - | - | - | - | - | - | - | - | 1 | - | - | - |
| | Polyether compound other than compound (D) (part by weight) | POLYRan (EO-PO) | - | - | - | - | - | - | - | - | - | - | - | 0.5 | - | - |
| | | PEO-PPO-PEO | - | - | - | - | - | - | - | - | - | - | - | - | 3 | - |
| | Silicone-type defoaming agent | I SN-Defoamer 1315 | - | - | - | - | - | - | - | - | - | - | - | 0.1 | - | - |
| | Other crosslinking agent (water-soluble crosslinking agent) (part by weight) | Denacol EX-512 | - | - | - | - | - | - | - | - | - | - | - | - | - | 4.6 |
| | [Number of moles of carboxyl-reactive functional groups]/[Number of moles of carboxyl groups] (molar ratio) | | 0.5 | 0.5 | 0.5 | 0.5 | 0.5 | 0.5 | 0.5 | 0.5 | 0.5 | 0.5 | 0.5 | 0.5 | 0.5 | 0.5 |

(continued)

| | | | Ex. 1 | Ex. 2 | Ex. 3 | Ex. 4 | Ex. 5 | Ex. 6 | Ex. 7 | Ex. 8 | Com. Ex. 1 | Com. Ex. 2 | Com. Ex. 3 | Com. Ex. 4 | Com. Ex. 5 | Com. Ex. 6 |
|---|---|---|---|---|---|---|---|---|---|---|---|---|---|---|---|---|
| Evaluation results | Resistance to increase in adhesive strength | Initial adhesive strength (N/25 mm) | 0.06 | 0.07 | 0.07 | 0.06 | 0.06 | 0.06 | 0.06 | 0.09 | 0.07 | 0.04 | 0.02 | unmeasure d*1 | 0.03 | 0.09 |
| | | Adhesive strength 40°C for one week after affixation/ storage at (N/25 mm) | 0.07 | 0.09 | 0.09 | 0.07 | 0.07 | 0.07 | 0.07 | 0.10 | 0.08 | 0.06 | 0.07 | | 0.03 | 0.21 |
| | Less-staining properties | | Good | Good | Good | Good | Good | Good | Good | Good | Good | Poor | Poor | Poor | Poor | Poor |
| | Appearance | | Good | Good | Good | Good | Good | Good | Good | Good | Poor | Poor | Poor | Poor | Poor | Good |
| | Whitening (whitening of pressure-sensitive adhesive sheet upon storage at high humidity) | Haze (%) before high-humidity storage | 2.4 | 2.4 | 2.4 | 2.4 | 2.4 | 2.4 | 2.4 | 2.4 | 3.2 | 3.3 | 2.4 | 5.4 | 172 | 2.4 |
| | | Haze (%) after high-humidity storage (50°C, 95%RH, 24hrs) | 2.5 | 2.6 | 2.6 | 2.5 | 2.5 | 2.5 | 2.5 | 2.5 | 3.3 | 3.4 | 4.9 | 8.1 | unme asure d*2 | 2.6 |
| | Solvent-insoluble content(% by weight) of pressure-sensitive adhesive layer (after crosslinking) | | 95 | 96 | 97 | 96 | 94 | 95 | 95 | 96 | 96 | 96 | 96 | 95 | 93 | 90 |
| | Elongation at rupture (%) of pressure-sensitive adhesive layer (after crosslinking) | | 102 | 107 | 98 | 105 | 111 | 105 | 99 | 107 | 111 | 105 | 101 | 103 | 115 | 341 |

*1: Unmeasured because of poor appearance
*2: Unmeasured because of high haze before high-humidity storage

The abbreviations used in Table 1 are as follows. In Table 1, the blending quantities of respective components of the removable water-dispersible acrylic pressure-sensitive adhesive compositions are indicated as actual blending quantities (blending quantities of the commercial products), whereas the amount of the acrylic emulsion polymer (A) is indicated by weight of solids content.

[Constitutive Monomers]

2EHA: 2-Ethylhexyl acrylate
MMA: Methyl methacrylate
AA: Acrylic acid

[Emulsifiers]

SE-10N: Trade name "ADEKA REASOAP SE-10N" (nonionic-anionic reactive emulsifier) supplied by ADEKA CORPORATION

[Crosslinking agents]

TETRAD-C: Trade name "TETRAD-C" (1,3-bis(N,N-diglycidylaminomethyl)cyclohexane, having an epoxy equivalent of 110 and a number of functional groups of 4) supplied by Mitsubishi Gas Chemical Company, Inc.
Denacol EX-512: Trade name "Denacol EX-512" (polyglycerol polyglycidyl ether, having an epoxy equivalent of 168 and a number of functional groups of about 4) supplied by Nagase ChemteX Corporation

[Acetylenic Diol Compounds]

Surfynol 104H: Trade name "Surfynol 104H" (having a HLB value of 4 and an active component content of 75 percent by weight) supplied by Air Products and Chemicals Inc.
Surfynol 104PG-50: Trade name "Surfynol 104PG-50" (having a HLB value of 4 and an active component content of 50 percent by weight) supplied by Air Products and Chemicals Inc.
Surfynol 420: Trade name "Surfynol 420" (having a HLB value of 4 and an active component content of 100 percent by weight) supplied by Air Products and Chemicals Inc.
Surfynol 440: Trade name "Surfynol 440" (having a HLB value of 8 and an active component content of 100 percent by weight) supplied by Air Products and Chemicals Inc.
Surfynol 465: Trade name "Surfynol 465" (having a HLB value of 13 and an active component content of 100 percent by weight) supplied by Air Products and Chemicals Inc.

[Polyether Compounds]

ADEKA Pluronic 25R-1: Trade name "ADEKA Pluronic 25R-1" (having a number-average molecular weight of 2800, an EO content of 10 percent by weight, and an active component content of 100 percent by weight) supplied by ADEKA CORPORATION
ADEKA Pluronic 17R-3: Trade name "ADEKA Pluronic 17R-3" (having a number-average molecular weight of 2000, an EO content of 30 percent by weight, and an active component content of 100 percent by weight) supplied by ADEKA CORPORATION
PPO-PEO-PPO: Poly(propylene glycol)-block-poly(ethylene glycol)-block-poly(propylene glycol) supplied by SIGMA-ALDRICH Corporation, having a number-average molecular weight of 2000, an EO content of 50 percent by weight, and an active component content of 100 percent by weight
POLYRan (EO-PO): Poly(ethylene glycol-ran-propylene glycol) supplied by SIGMA-ALDRICH Corporation, having

a number-average molecular weight of 2500, an EO content of 75 percent by weight, and an active component content of 100 percent by weight

PEO-PPO-PEO: Poly(ethylene glycol)-block-poly(propylene glycol)-block-poly(ethylene glycol) supplied by SIGMA-ALDRICH Corporation, having a number-average molecular weight of 1900, an EO content of 50 percent by weight, and an active component content of 100 percent by weight

[Silicone Defoaming Agent]

SN-Defoamer 1315: Trade name "SN-Defoamer 1315" (silicone-type defoaming agent) supplied by SAN NOPCO LIMITED

Results in Table 1 demonstrate as follows. The pressure-sensitive adhesive sheets (Examples 1 to 8) each having a pressure-sensitive adhesive layer formed from a pressure-sensitive adhesive composition satisfying the conditions specified in the present invention are pressure-sensitive adhesive sheets having good appearance, not causing whitening staining of polarizing plates even in a high-humidity environment after affixation and removal of the pressure-sensitive adhesive sheets, and thereby excelling in less-staining properties. The pressure-sensitive adhesive sheets indicate less increase in adhesive strength with time after affixation.

By contrast, the samples (Comparative Examples 1 to 5) each using a water-insoluble crosslinking agent and not using the compound (D) have poor appearances, even when a silicone defoaming agent is used (Comparative Example 2), or a polyether compound other than the compound (D) is used (Comparative Examples 4 and 5). The sample (Comparative Example 3) using an acetylenic diol compound having a HLB value of 13 or more causes whitening staining to the adherend in a high-humidity environment and suffers from whitening of the pressure-sensitive adhesive sheet itself after high-humidity storage. The sample (Comparative Example 6) without using a water-insoluble crosslinking agent has a large adhesive strength after affixation and storage, indicating an increased adhesive strength with time. This sample also causes whitening staining to the adherend in a high-humidity environment.

As is described above, the samples using the pressure-sensitive adhesive compositions not satisfying the conditions specified in the present invention fail to satisfy all of the appearance characteristics, less-staining properties, and resistance to increase in adhesive strength.

In addition, the pressure-sensitive adhesive sheets (Examples 1 to 8) respectively including pressure-sensitive adhesive layers formed from the pressure-sensitive adhesive compositions satisfying the conditions specified in the present invention are satisfactory pressure-sensitive adhesive sheets which are resistant to whitening even after high-humidity storage.

While preferred embodiments of the present invention have been described using specific terms, such description is for illustrated purposes only, and it is to be understood that various changes and modifications may be made without departing from the spirit and scope of the present invention as defined in the appended claims.

## Claims

**1.** A removable water-dispersible acrylic pressure-sensitive adhesive composition comprising:

an acrylic emulsion polymer (A) including a (meth)acrylic alkyl ester and a carboxyl-containing unsaturated monomer as essential constitutive monomers and having a content of the (meth)acrylic alkyl ester of from 70 to 99.5 percent by weight and a content of the carboxyl-containing unsaturated monomer of from 0.5 to 10 percent by weight, each based on the total amount of constitutive monomers;
a water-insoluble crosslinking agent (B);
an acetylenic diol compound (C); and
a compound (D) represented by following Formula (I):

$$R^aO\text{-}(PO)_l\text{-}(EO)_m\text{-}(PO)_n\text{-}R^b \qquad (I)$$

wherein each of $R^a$ and $R^b$ independently represents a linear or branched-chain alkyl group or hydrogen atom; PO represents oxypropylene group; EO represents oxyethylene group; and each of 1, m, and n is independently a positive integer, where EO and POs are added in a block manner, and

the acetylenic diol compound (C) having a hydrophile-lypophile balance value (HLB value) of less than 13.

**2.** The removable water-dispersible acrylic pressure-sensitive adhesive composition according to claim 1, wherein the acrylic emulsion polymer (A) is a polymer polymerized with a reactive emulsifier including a radically polymerizable functional group in molecule.

**3.** The removable water-dispersible acrylic pressure-sensitive adhesive composition according to one of claims 1 and 2, wherein the water-insoluble crosslinking agent (B) has a functional group reactive with carboxyl group, and wherein the functional group is present in a number of moles of from 0.3 to 1.3 moles per 1 mole of carboxyl group in the carboxyl-containing unsaturated monomer.

**4.** A pressure-sensitive adhesive sheet comprising:

a substrate; and
a pressure-sensitive adhesive layer arranged on at least one side of the substrate and formed from the removable water-dispersible acrylic pressure-sensitive adhesive composition of any one of claims 1 to 3.

**5.** The pressure-sensitive adhesive sheet according to claim 4, wherein the pressure-sensitive adhesive layer has a solvent-insoluble content of 90 percent by weight or more and an elongation at break of 200% or less.

**6.** The pressure-sensitive adhesive sheet according to one of claims 4 and 5, as a surface-protecting film for an optical element.

Europäisches Patentamt
European Patent Office
Office européen des brevets

# EUROPEAN SEARCH REPORT

Application Number
EP 12 16 3915

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/176876 A1 (LEE SOU P [US]) 11 August 2005 (2005-08-11) * the whole document * ----- | 1-6 | INV. C09J7/00 C09J133/00 C09J133/08 |

TECHNICAL FIELDS SEARCHED (IPC)
C09J

The present search report has been drawn up for all claims

1

| Place of search | Date of completion of the search | Examiner |
|---|---|---|
| Munich | 6 August 2012 | Trauner, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 16 3915

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2012

| Patent document cited in search report | Publication date | Patent family member(s) | Publication date |
|---|---|---|---|
| US 2005176876 A1 | 11-08-2005 | US 2005176876 A1 | 11-08-2005 |
| | | WO 2005077986 A1 | 25-08-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11961 A
- JP 2001064607 A
- JP 2001131512 A
- JP 2003027026 A
- JP 2004091563 A
- JP 2006169496 A
- JP H0834963 A
- JP 2005279565 A
- JP 2007031585 A


### Non-patent literature cited in the description


- **W.C. GRIFFIN.** *J. Soc. Cosmetic Chemists,* 1949, vol. 1, 311
- **KOSHITAMI TAKAHASHI ; YOSHIRO NAMBA ; MOTOO KOIKE ; MASAO KOBAYASHI.** Handbook of Surfactants. 25 November 1972, 179-182